(19)

Europäisches
Patentamt
European
Patent Office
Office européen
des brevets

(11) **EP 2 495 898 A1**

(12) **EUROPEAN PATENT APPLICATION**
published in accordance with Art. 153(4) EPC

(43) Date of publication:
**05.09.2012 Bulletin 2012/36**

(51) Int Cl.:
**H04J 11/00** *(2006.01)*     **H04J 1/00** *(2006.01)*

(21) Application number: **10826561.2**

(22) Date of filing: **19.10.2010**

(86) International application number:
**PCT/JP2010/068365**

(87) International publication number:
**WO 2011/052429 (05.05.2011 Gazette 2011/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2009 JP 2009246037**

(71) Applicant: **Sharp Kabushiki Kaisha
Osaka-shi, Osaka 545-8522 (JP)**

(72) Inventors:
• **YOSHIMOTO Takashi
  Osaka 545-8522 (JP)**
• **YAMADA, Ryota
  Osaka 545-8522 (JP)**

(74) Representative: **Müller - Hoffmann & Partner
Innere Wiener Straße 17
81667 München (DE)**

(54) **RECEIVING DEVICE, RECEIVING METHOD, COMMUNICATION SYSTEM, AND
COMMUNICATION METHOD**

(57)     Provided is a receiving device including: a receiving unit that receives a multicarrier modulation signal; an interference cancelling unit that removes a modulation symbol replica generated using a decoding process result, from the signal received by the receiving unit, and outputs the resultant signal; and a signal detecting unit that decodes the signal outputted by the interference cancelling unit, and outputs the decoding process result. The interference cancelling unit generates the modulation symbol replica with the use of the decoding process result of part of data modulation symbols constituting the signal received by the receiving unit.

Fig. 3

**Description**

Technical Field

The present invention relates to a receiving device, a receiving method, a communication system, and a communication method.

Background Art

In wireless communication systems, for example, a multicarrier transmission scheme using orthogonal frequency division multiplexing (OFDM) can reduce an influence of multipath fading in fast digital signal transmission by the adoption of multicarrier and the insertion of a guard interval (GI). In the OFDM, however, if a delayed wave beyond the guard interval exists, the delayed wave leads to inter symbol interference (ISI), which is caused by the previous symbol entering a fast Fourier transform (FFT) interval, and to inter carrier interference (ICI), which is caused by a gap between symbols, that is, a signal discontinuity in the fast Fourier transform interval, resulting in characteristic degradation.

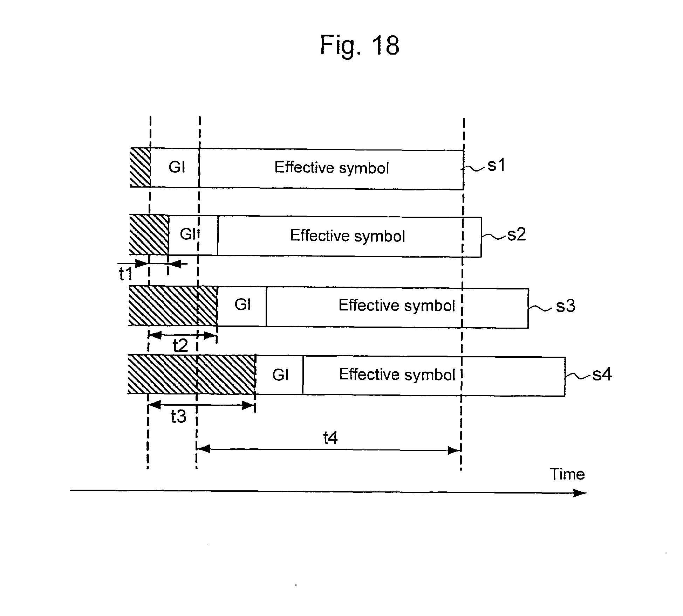

Figure 18 is a diagram illustrating an outline of a signal that reaches a receiving device from a transmitting device through a multipath environment. In Figure 18, the horizontal axis represents time. An OFDM symbol includes: a effective symbol; and a guard interval that is arranged before the effective symbol and is added by copying a latter part of the effective symbol.
Synchronization is made with a preceding wave s1 (first-arriving wave), and an FFT process is performed in a interval t4. In this case, a delayed wave s2 represents an example in which its delay time is a delay t1 falling within the guard interval, and delayed waves s3 and s4 respectively represent delayed waves having delays t2 and t3 beyond the guard interval. Note that the preceding wave and the delayed wave can also be referred to as arriving wave. Shaded portions in Figure 18 each represent components of the OFDM symbol before a desired OFDM symbol.
As illustrated in the shaded portions existing in early parts of the delayed waves s3 and s4, the OFDM symbol before the desired OFDM symbol enters the FFT interval t4, so that inter symbol interference (ISI) occurs. In addition, in the delayed wave s3, a gap between the desired OFDM symbol and the OFDM symbol before the desired OFDM symbol enters the interval t4, so that inter carrier interference (ICI) occurs. Similarly in the delayed wave s4, a gap between the desired OFDM symbol and the OFDM symbol before the desired OFDM symbol enters the interval t4, so that inter carrier interference occurs.
Techniques for improving the characteristic degradation caused by such inter symbol interference and such inter carrier interference are proposed in Patent Literature 1 and Patent Literature 2 given below. According to the proposed techniques, the characteristic degradation caused by the inter symbol interference and the inter carrier interference is improved in the following manner. That is, in a receiving device, after a demodulation operation is performed once, replica signals (interference replica signals) of subcarriers other than a desired subcarrier are created using an error correction result (an output of a maximum a posteriori probability (MAP) decoder), the replica signals containing the inter symbol interference components and the inter carrier interference components. Then, a signal obtained by removing the created signals from a received signal is iteratively subjected to processing including: a signal equalization process based on a minimum mean square error (MMSE) criterion; and a re-demodulation operation. Such a technique of iteratively performing interference cancellation, an equalization process, and a decoding process while exchanging a soft-decision result is referred to as turbo equalization.
Incidentally, in wireless communication systems, orthogonal frequency division multiple access (OFDMA) is exemplified as multiple access using OFDM (see, for example, Non Patent Literature 1).

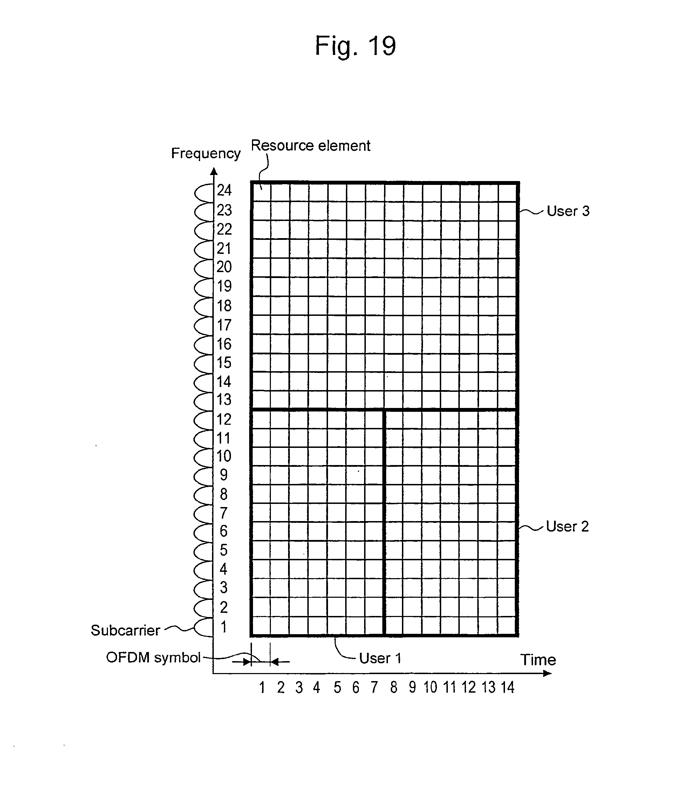

Figure 19 is a diagram illustrating OFDMA in which data modulation symbols of a user 1, a user 2, and a user 3 are allocated to a plurality of subcarriers and a plurality of OFDM symbols. In Figure 19, the vertical axis represents frequency, and the horizontal axis represents time. Here, a unit of one subcarrier and one OFDM symbol is referred to as resource element, and in Figure 19, a transmitter transmits data to a receiver in the form of a block (referred to as transmission frame) of data items arranged in 336 resource elements.
In Figure 19, the user 1 and the user 2 each occupy 84 resource elements of 12 subcarriers and 7 OFDM symbols. The user 3 occupies 168 resource elements of 12 subcarriers and 14 OFDM symbols. The data modulation symbols transmitted by each user are arranged in each subcarrier occupied by the corresponding user. In this case, each user encodes information bits for transmission, assuming the occupied resource elements as one block. A unit for encoding the information bits for transmission is referred to as encoding block (coding block), and a signal obtained by encoding the information bit is referred to as encoding bit. Then, the encoding blocks of the user 1 and the user 2 are each formed of information bits arranged in the 84 resource elements, and the encoding block of the user 3 is formed of information bits arranged in the 168 resource blocks. That is, in the OFDMA illustrated in Figure 19, the transmission frame includes the plurality of encoding blocks, and further, the data modulation symbols generated from the encoding bits of the different encoding blocks are allocated to the subcarriers constituting the same OFDM symbol.

Similarly in this OFDMA, if a delayed wave beyond a guard interval exists, inter symbol interference and inter carrier interference occur, resulting in degradation of transmission characteristics of each user.

Citation List

Patent Literature

Patent Literature 1: JP Patent Publication (Kokai) No. 2004-221702 A
Patent Literature 2: WO 2007/136056

Non Patent Literature

Non Patent Literature 1: "3rd Generation Partnership Project; Technical Specification Group Radio Access Network; Evolved Universal Terrestrial Radio Access (E-UTRA); Physical Channels and Modulation (Release 8)" 3GPP TS 36.211 V8.3.0, May, 2008

Summary of Invention

Technical Problem

The conventional turbo equalization process described in Patent Literature 1 or Patent Literature 2 is performed using a replica corresponding to the data modulation symbols arranged in all the subcarriers constituting the same OFDM symbol. Accordingly, in the conventional turbo equalization process, in the case of the reception of an OFDMA signal whose transmission frame includes a plurality of encoding blocks, it is necessary to calculate an error correction decoding result typified by an encoding bit LLR, not only for a desired encoding block but also for an undesired encoding block. For example, a receiving device of the user 1 receives an OFDMA signal to which the three users are allocated as illustrated in Figure 19, and the turbo equalization process is performed on the second OFDM symbol. In this case, in order to generate an inter symbol interference replica corresponding to the second OFDM symbol, it is necessary to generate a modulation symbol replica from a signal decoding result for the user 1 and a signal (undesired signal) decoding result for the user 3. As a result, the error correction decoding process on the signal (undesired encoding block) of the other user unfavorably decreases the efficiency of the signal processing by the receiver.

The present invention, which has been made in view of the above-mentioned problem, has an object to provide a receiving device and a receiving method capable of removing, in the case where a multicarrier signal in which data signals of a plurality of users are arranged is received under the existence of a delayed wave beyond a guard interval, inter symbol interference and inter subcarrier interference without any prolongation of turbo equalization process time even if the number of bits of encoding blocks is different among the plurality of users, to thereby improve transmission characteristics.

Solution to Problem

An aspect of the present invention provides a receiving device including: a receiving unit that receives a multicarrier modulation signal; an interference cancelling unit that removes a modulation symbol replica generated using a decoding process result, from the signal received by the receiving unit, and outputs the resultant signal; and a signal detecting unit that decodes the signal outputted by the interference cancelling unit, and outputs the decoding process result. The interference cancelling unit generates the modulation symbol replica with the use of the decoding process result of part of data modulation symbols constituting the signal received by the receiving unit. It is preferable that the interference cancelling unit remove interference with the use of the modulation symbol replica corresponding to part of the data modulation symbols constituting the signal received by the receiving unit.

It is preferable that the receiving unit receive the multicarrier modulation signal including the data modulation symbols generated using encoding bits of a plurality of encoding blocks, and that the interference cancelling unit generate the modulation symbol replica with the use of the decoding process result of the data modulation symbols for at least one of the encoding blocks. It is preferable that the encoding blocks in the multicarrier modulation signal be allocated for each user. It is preferable that the signal detecting unit decode only a desired data modulation symbol in the signal outputted by the interference cancelling unit, and output the decoding process result.

It is preferable that the receiving device further include a demodulating unit that demodulates the signal outputted by the interference cancelling unit, and that the interference cancelling unit generate the modulation symbol replica with the use of: the decoding process result of part of the data modulation symbols; and the demodulation process result outputted by the demodulating unit, of another part of the data modulation symbols, the data modulation symbols constituting the signal received by the receiving unit. It is preferable that the receiving unit receive the multicarrier modulation signal including the data modulation symbols generated using encoding bits of a plurality of encoding blocks, and that the interference cancelling unit generate the modulation symbol replica with the use of: the decoding process result of the modulation symbols for at least one of the encoding blocks; and the demodulation result of the data modulation symbols for at least another one of the encoding blocks.

It is preferable that the interference cancelling unit include: a symbol replica generating unit that generates the modulation symbol replica with the use of the decoding process result; an interference replica generating unit that generates an interference replica with the use of the modulation symbol replica and a propagation channel estimation value; and a subtracting unit that subtracts the interference replica from the signal received by the receiving unit.

Another aspect of the present invention provides a receiving method including: a first step of receiving a multicarrier modulation signal; a second step of removing a modulation symbol replica generated using a decoding process result, from the signal received in the first step, and outputting the resultant signal; and a third step of decoding the signal outputted in the second step, and outputting the decoding process result. It is preferable that the second step include a step of generating the modulation symbol replica with the use of the decoding process result of part of data modulation symbols constituting the signal received by the receiving unit.

Further, the present invention provides a communication system including: a transmitting device that transmits a multicarrier modulation signal; and a receiving device that receives and decodes the signal transmitted by the transmitting device. The receiving device includes: a receiving unit that receives the signal transmitted by the transmitting device; an interference cancelling unit that removes a modulation symbol replica generated using a decoding process result, from the signal received by the receiving unit, and outputs the resultant signal; and a signal detecting unit that decodes the signal outputted by the interference cancelling unit, and outputs the decoding process result. The interference cancelling unit generates the modulation symbol replica with the use of the decoding process result of part of data modulation symbols constituting the signal received by the receiving unit.

Further, the present invention provides a communication method including: a step of transmitting a multicarrier modulation signal; and a step of receiving and decoding the signal transmitted by the transmitting device. The step of receiving and decoding includes: a first step of receiving the multicarrier modulation signal; a second step of removing a modulation symbol replica generated using a decoding process result, from the signal received in the first step, and outputting the resultant signal; and a third step of decoding the signal outputted in the second step, and outputting the decoding process result. The second step includes generating the modulation symbol replica with the use of the decoding process result of part of data modulation symbols constituting the signal received by the receiving unit.

Further, the present invention provides a receiving circuit including: an interference cancelling circuit that removes a modulation symbol replica generated using a decoding process result, from a received multicarrier modulation signal, and outputs the resultant signal; a signal detecting circuit that decodes the signal outputted by the interference cancelling circuit, and outputs the decoding process result; and a chip controlling circuit that controls at least the interference cancelling circuit. The interference cancelling circuit includes a circuit that generates the modulation symbol replica with the use of the decoding process result of part of data modulation symbols constituting the signal received by a receiving unit.

Further, the present invention may provide a program for causing a computer to implement the above-mentioned communication method, and may provide a computer-readable recording medium that records the program. The program may be acquired through a transmission medium such as the Internet.

The present description encompasses the contents described in the description and/or the drawings of JP Patent Application (Tokugan) No. 2009-246037 A, on the basis of which the priority of the present application is claimed.

Advantageous Effects of Invention

According to the present invention, in the case where a multicarrier signal in which data signals of a plurality of encoding blocks are arranged is received under the existence of a delayed wave beyond a guard interval, it is possible to reduce a load of interference replica generation for the encoding blocks other than a desired encoding block, so that a decrease in efficiency of signal processing by a receiver can be improved.

In particular, inter symbol interference and inter subcarrier interference can be efficiently removed from the desired encoding block through a turbo equalization process, without depending on the arrangement of data modulation symbols generated from encoding bits of an undesired encoding block arranged in a transmission frame, so that transmission characteristics can be improved. In addition, the turbo equalization process can be performed on the basis of the number of encoding bits of the desired encoding block, without depending on the number of encoding bits of the undesired encoding block, so that transmission characteristics can be improved.

Brief Description of Drawings

[Figure 1] Figure 1 is a functional block diagram illustrating a configuration example of a transmitting device 100 according to a first embodiment of the present invention.

[Figure 2] Figure 2 is a diagram illustrating an example in which data modulation symbols of a user n inputted by a symbol generating unit and pilot symbols are mapped onto input points of an IFFT unit.

[Figure 3] Figure 3 is a schematic block diagram illustrating a configuration example of a receiving device according to the first embodiment of the present invention.

[Figure 4] Figure 4 is a functional block diagram illustrating a configuration example of an interference cancelling unit.

[Figure 5] Figure 5 is a functional block diagram illustrating a configuration example of a replica generating unit.

[Figure 6] Figure 6 is a flow chart for describing an operation of the receiving device.

[Figure 7] Figure 7 is a functional block diagram illustrating a configuration example of a receiving device according to a second embodiment of the present invention.

[Figure 8] Figure 8 is a functional block diagram illustrating a configuration example of an interference cancelling unit.

[Figure 9] Figure 9 is a functional block diagram illustrating a configuration example of a replica generating unit.

[Figure 10] Figure 10 is a flow chart for describing an operation of the receiving device.

[Figure 11] Figure 11 is a diagram illustrating another example in which data modulation symbols of a plurality of users and pilot symbols are mapped onto resource elements.

[Figure 12] Figure 12 is a diagram illustrating another example in which data modulation symbols of a plurality of users and pilot symbols are mapped onto resource elements.

[Figure 13] Figure 13 is a functional block diagram illustrating a configuration example of a transmitting device according to a third embodiment of the present invention.

[Figure 14] Figure 14 is a diagram illustrating an example in which data modulation symbols of a user 1 inputted by a symbol generating unit and pilot symbols are mapped onto input points of an IFFT unit.

[Figure 15] Figure 1 is a functional block diagram illustrating a configuration example of a receiving device according to a third embodiment of the present invention.

[Figure 16] Figure 16 is a functional block diagram illustrating a configuration example of an interference cancelling unit.

[Figure 17] Figure 17 is a flow chart for describing an operation of the receiving device.

[Figure 18] Figure 18 is a diagram illustrating an outline of a signal that reaches a receiving device from a transmitting device through a multipath environment.

[Figure 19] Figure 19 is a diagram illustrating OFDMA in which data modulation symbols of a user 1, a user 2, and a user 3 are allocated to a plurality of subcarriers and a plurality of OFDM symbols, the vertical axis represents frequency, and the horizontal axis represents time.

Reference Signs List

100 ... transmitting device, 101 ... antenna, 1021 to N ... symbol generating unit, 111-1 to N ... encoding unit, 103 ... IFFT unit, 104 ... GI inserting unit, 105 ... transmitting unit, 200 ... receiving device, 201 ... antenna, 202 ... receiving unit, 203 ... received signal storing unit, 204 ... interference cancelling unit, 205 ... GI removing unit, 206 ... FFT unit, 207 ... propagation channel compensating unit, 208-1 ... signal detecting unit, 209 ... propagation channel estimating unit, 221-1 ... demodulating unit, 222-1 ... deinterleaving unit, 223-1 ... decoding unit

Description of Embodiments

Hereinafter, embodiments of the present invention are described in detail.

(First Embodiment)

In an embodiment of the present invention, description is given, as an example, of the case where a transmitting device transmits a signal of OFDMA in which a plurality of users make frequency multiple access in orthogonal multicarrier.

A communication system according to a first embodiment of the present invention includes: a transmitting device 100 that transmits an OFDMA signal (multicarrier modulation signal) to which signals of a plurality of users are allocated; and a receiving device 200 that receives the signal transmitted by the transmitting device 100. Description is given below, as an example, of the case where the transmitting device 100 is installed in a base station in a downlink of a cellular system and where the receiving device 200 is mounted on one of a plurality of mobile terminals linked to the base station.

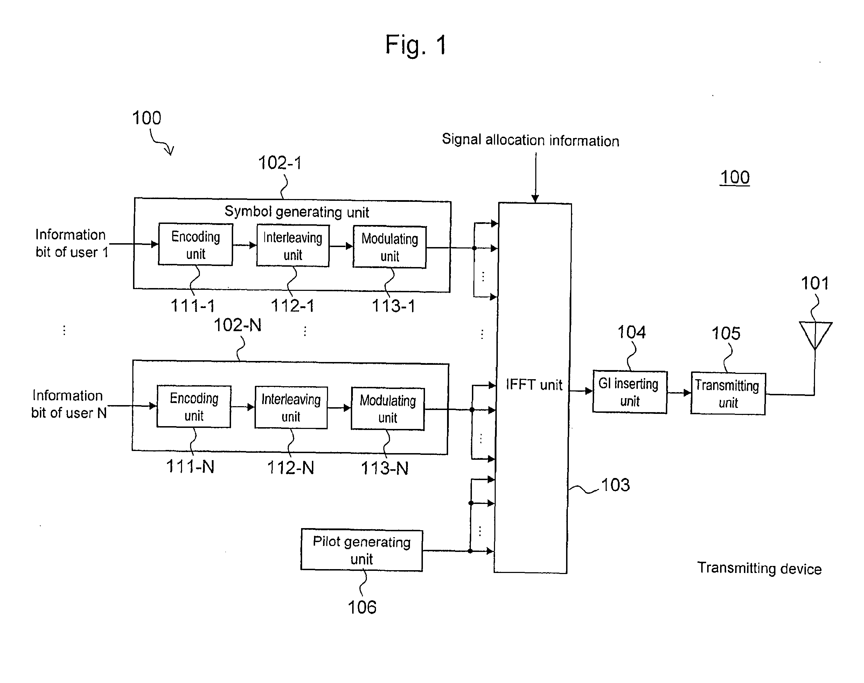

Figure 1 is a functional block diagram illustrating a configuration example of the transmitting device 100 according to the first embodiment of the present invention. The transmitting device 100 includes symbol generating units 102-1 to 102-N, an inverse fast Fourier transform (IFFT) unit 103, a GI inserting unit 104, a transmitting unit 105, and a pilot generating unit 106, and an antenna unit 101 is connected to the transmitting unit 105. Note that N represents the number of users who can link to the base station in which the transmitting device 100 is installed.

The symbol generating unit 102-n (n = 1, 2, ..., N) generates a signal to be transmitted from the transmitting device 100 in the base station to a user n. The symbol generating unit 102-n includes an encoding unit 111-n, an interleaving unit 112-n, and a modulating unit 113-n.

The symbol generating unit 102-n receives information bits that are inputted by a media access control (MAC) unit and the like (not illustrated in Figure 1; the MAC unit and the like refer to a function positioned in a higher layer of a MAC layer and a network layer) and are transmitted to the user n. Note that the information bits represent compressed and encoded sound signals, video signals, and other data signals in the form of "0" and "1 ". The encoding unit 111-n performs any of error correction encoding processes such as turbo encoding, low density parity check (LDPC), and convolutional encoding, on the inputted information bits of the user n. That is, the encoding unit 111-n performs the encoding process on the basis of an encoding block different for each user.

The interleaving unit 112-n rearranges the order of encoding bits of the user n outputted by the encoding unit 111-n, in order to prevent the occurrence of an burst error caused by a drop in received power due to frequency selective fading. The modulating unit 113-n maps the encoding bits of the user n outputted by the interleaving unit 112-n, and generates data modulation symbols of binary phase shift keying (BPSK), quadrature phase shift keying (QPSK), 16 quadrature amplitude modulation (16QAM), 64 quadrature amplitude modulation (64QAM), and the like.

The pilot generating unit 106 generates pilot symbols that enable the receiving device to estimate a propagation channel. The pilot symbols may be common to the mobile terminals (users) linked to the base station in which the transmitting device 100 is installed, and may be defined for each user. It is preferable that a code sequence constituting the pilot symbol be an orthogonal sequence such as a Hadamard code and a constant amplitude zero auto-correlation (CAZAC) sequence.

The IFFT unit 103 maps (subcarrier-maps) the data modulation symbols of the user n inputted by the symbol generating unit 102-n and the pilot symbols onto IFFT input points on the basis of signal allocation information given by the MAC unit and the like (not illustrated), and performs an IFFT process, to thereby convert each symbol from a frequency-domain signal into a time-domain signal. Note that, for simplicity of description, the description is given below assuming that the number of IFFT points and the number of subcarriers are the same as each other, but the present embodiment is not limited thereto. The number of IFFT points may be equal to or less than the number of subcarriers. As long as the number of subcarriers is equal to or more than the number of IFFT points, a plurality of the IFFT units may be provided.

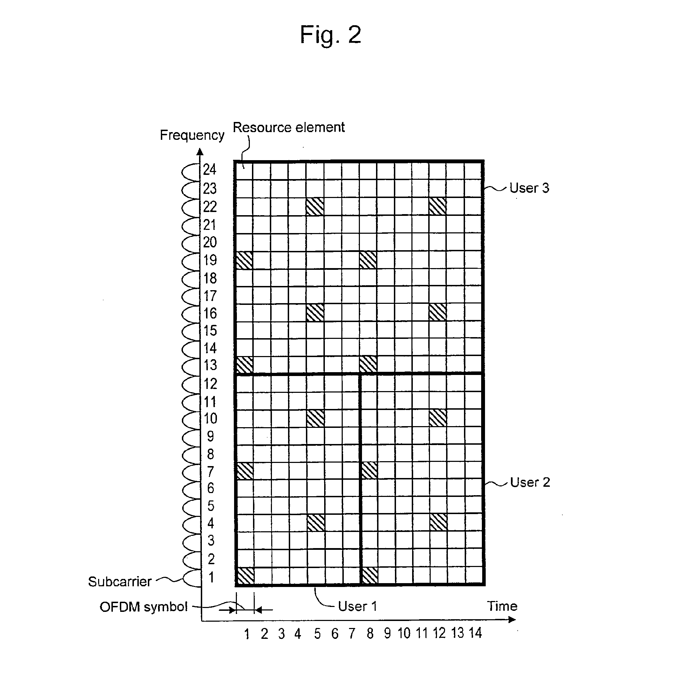

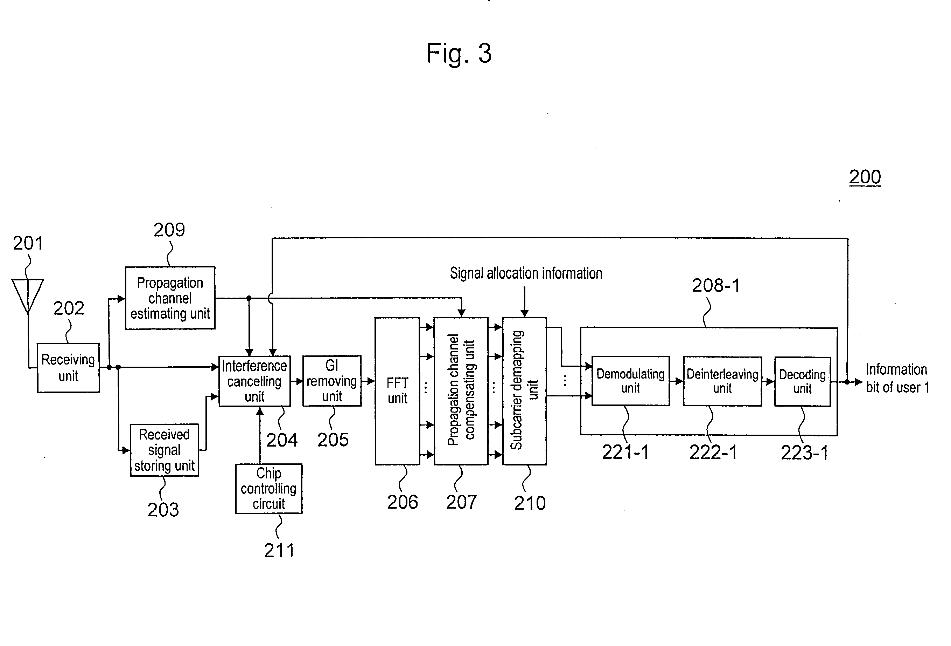

Figure 2 is a diagram illustrating an example in which the data modulation symbols of the user n inputted by the symbol generating unit 102-n and the pilot symbols are mapped onto the input points of the IFFT unit 103. In Figure 2, 3 users and the pilot symbols are allocated to a transmission frame including 24 subcarriers and 14 OFDM symbols. It is assumed that a resource element corresponding to a $k^{th}$ subcarrier in the first OFDM symbol is expressed by (k, 1).

In Figure 2, the pilot symbols are arranged in resource elements (Kp, Lp) = (1, 1), (7, 1), (13, 1), (19, 1), (4, 5), (10, 5), (16, 5), (22, 5),(1, 8), (7, 8), (13, 8), (19, 8), (4, 12), (10, 12), (16, 12), and (22, 12) (corresponding to shaded resource elements). The data modulation symbols to be transmitted to the user 1 are arranged in resource elements (K1, L1), (K1 = 1, ..., 12; L1 = 1, ..., 7; excluding the resource elements in which the pilot symbols are arranged). The data modulation symbols to be transmitted to the user 2 are arranged in resource elements (K2, L2), (K2 = 1, ..., 12; L2 = 8, ..., 14; excluding the resource elements in which the pilot symbols are arranged). The data modulation symbols to be transmitted to the user 3 are arranged in resource elements (K3, L3), (K3 = 13, ..., 24; L3 = 1, ..., 14; excluding the resource elements in which the pilot symbols are arranged). Accordingly, for example, in the IFFT process on the first OFDM symbol, the pilot symbols are mapped onto the 1st, 7th, 13th, and 19th IFFT input points, the data modulation symbols of the user 1 are mapped onto the 1st to 12th IFFT input points (excluding the IFFT input points onto which the pilot symbols are mapped), and the data modulation symbols of the user 2 are mapped onto the 13th to 24th IFFT input points (excluding the IFFT input points onto which the pilot symbols are mapped).

Onto which resource element the data modulation symbol of each user is to be mapped is specified by the signal allocation information. Each resource element specified by the signal allocation information is determined on the basis of propagation channel conditions between the base station including the transmitting device 100 and the mobile terminal of each user, the amount of data transmitted by the base station to the mobile terminal of each user, and the like. Such determination of onto which resource element each data modulation symbol is to be mapped is referred to as scheduling.

The user may be informed of the signal allocation information through the same OFDM symbol as the OFDA symbol to which the data modulation symbols of this user are allocated or through the same transmission frame as the transmission frame to which the data modulation symbols of this user are allocated, or the user may be informed thereof through a different OFDM symbol or a different transmission frame.

In Figure 2, the data modulation symbols to be transmitted to the user and the pilot symbols are mapped onto the resource elements constituting the OFDMA, and a control signal for each user may also be contained.

Returning to Figure 1, the GI inserting unit 104 adds a guard interval (GI) to the time-domain signal obtained by the conversion by the IFFT unit 103. For example, the GI inserting unit 104 copies part of the latter half of the time-domain signal (effective symbol) outputted by the IFFT unit 103, and adds the copied part to the beginning of the effective symbol. The effective symbol to which the GI is added is referred to as OFDM symbol. Assuming that the signal outputted by the GI inserting unit 104 is s(t), this signal can be expressed by the following Expression (1).

[Expression 1]

$$s(t) = \frac{1}{\sqrt{N_f}} \sum_{l=-\infty}^{\infty} \sum_{k=0}^{N_f-1} c_{k,l} e^{jk\Delta_f (i - lT_s)} \qquad (1)$$

In the above expression, Nf represents the number of IFFT points, $c_{k,1}$ represents a symbol allocated to the $k^{th}$ subcarrier in the first OFDM symbol, $\Delta f$ represents a subcarrier interval, Ts represents an OFDM symbol length (including a GI length), and j represents an imaginary unit.

The transmitting unit 105 converts the OFDM symbol outputted by the GI inserting unit 104 into an analog signal (performs digital-to-analog conversion), performs a filtering process for band limitation on the signal converted into the analog signal, up-converts the filtered signal into a signal having a transmittable frequency band, and transmits the up-converted signal through the antenna unit 101. The signal outputted by the transmitting device 100 is referred to as OFDMA signal.

Description is given above, as an example, of the case where the data modulation symbols of the plurality of users are allocated to the OFDMA signal received by the receiving device 200 according to the present embodiment and where the data modulation symbols are formed of encoding bits obtained by encoding information bits for each user. The technique of the present embodiment can be similarly applied to the case where the data modulation symbols are formed of encoding bits obtained by encoding information bits for the same user by the plurality of encoding units. That is, the technique of the present embodiment can be similarly applied to the case where the user 1 occupies all the resource elements occupied by the user 1 to the user 3 in Figure 2 and where information bits constituting data modulation symbols allocated to the resource elements occupied by the user 1 are divided into (K1, L1), (K2, L2), and (K3, L3) to be encoded.

Figure 3 is a schematic block diagram illustrating a configuration example of the receiving device 200 according to the first embodiment of the present invention. Description is given assuming that the receiving device 200 is mounted on the mobile terminal of the user 1, the mobile terminal receiving the signal transmitted by the transmitting device 100. Note that the receiving device mounted on the mobile terminal of the user n (n = 2, ..., N) can have at least the same function.

The receiving device 200 includes a receiving unit 202, a received signal storing unit 203, an interference cancelling unit 204, a GI removing unit 205, an FFT unit 206, a propagation channel compensating unit 207, a subcarrier demapping unit 210, a signal detecting unit 208-1, and a propagation channel estimating unit 209, and an antenna unit 201 is connected to the receiving unit 202. If a part or the entirety of the receiving device 200 is implemented on a chip as an integrated circuit, the receiving device 200 further includes a chip controlling circuit 211 that controls the respective functional blocks.

In the receiving device 200, upon the reception of the OFDMA signal transmitted by the transmitting device 100 through the antenna unit 201, the receiving unit 202 down-converts the received signal into a signal having a frequency band that allows digital signal processing such as a signal detection process, performs a filtering process for spurious emission removal on the down-converted signal, converts the filtered analog signal into a digital signal (performs analog-to-digital conversion), and outputs the converted signal to the received signal storing unit 203, the interference cancelling unit 204, and the propagation channel estimating unit 209.

The propagation channel estimating unit 209 performs propagation channel estimation for estimating fluctuations in amplitude and phase caused by fading and the like between the transmitting device 100 and the receiving device 200, and outputs a propagation channel estimation value as the propagation channel estimation result to the interference cancelling unit 204 and the propagation channel compensating unit 207. The propagation channel estimation can be performed using, for example, the pilot symbols as known signals contained in the signal outputted by the receiving unit 202. In the case of the reception of the OFDMA signal illustrated in Figure 2, the propagation channel estimating unit 209 calculates frequency responses with the use of signals obtained by converting the received OFDMA signal into a frequency domain, the signals corresponding to signals of the subcarriers to which the pilot symbols are allocated (one or more signal components of the resource elements (Kp, Lp) = (1, 1), (7, 1), (13, 1), (19, 1), (4, 5), (10, 5), (16, 5), (22, 5), (1, 8), (7, 8), (13, 8), (19, 8), (4, 12), (10, 12), (16, 12), and (22, 12)). The frequency responses of the subcarriers other than the subcarriers in which the pilot symbols are arranged can be calculated according to an interpolation technique such as linear interpolation or FFT interpolation on the basis of the frequency responses of the subcarriers in which the pilot symbols are arranged.

Note that iterative propagation channel estimation using a decoding result outputted by the signal detecting unit 208-1 can also be applied to the propagation channel estimation.

The received signal storing unit 203 stores the signal outputted by the receiving unit 202. In addition, the received signal storing unit 203 outputs the stored signal in the case where a iterative process is performed in an interference cancellation process of the interference cancelling unit 204.

The interference cancelling unit 204 iteratively performs a process for removing interference components from the signal outputted by the receiving unit 202 or the received signal storing unit 203, with the use of: the propagation channel estimation value outputted by the propagation channel estimating unit 209; and the decoding result outputted by the signal detecting unit 208-1. Specifically, the interference cancelling unit 204 generates a replica of a signal that is likely to have been transmitted by the transmitting device 100 (as the transmission source of the received signal) to its own receiving device, with the use of a log likelihood ratio (LLR) of each after-decoding encoding bit, the LLR being outputted by the signal detecting unit 208-1. That is, the receiving device 200 generates a replica of a transmitted signal for the user 1, the transmitted signal being transmitted by the transmitting device 100. Further, the interference cancelling unit 204 generates an interference replica for the user 1 with the use of this transmitted signal replica and the propagation channel estimation value outputted by the propagation channel estimating unit 209, and subtracts the interference replica from the signal outputted by the receiving unit 202 or the received signal storing unit 203. Accordingly, the interference cancelling unit 204 removes the interference replica that is generated using the decoding process result of part of the data modulation symbols constituting the received OFDMA signal, to thereby remove the interference components (the detail thereof is described later).

The GI removing unit 205 removes the guard interval, which is added by the transmitting device 100 in order to avoid distortion caused by a delayed wave, from the signal that is outputted by the interference cancelling unit 204 and from which the interference component replica is removed. The FFT unit 206 performs a Fourier transform process for converting the signal from which the GI removing unit 205 removes the guard interval, from a time-domain signal into a frequency-domain signal. The propagation channel compensating unit 207 calculates a weighting factor for correcting propagation channel distortion caused by fading, according to zero forcing (ZF), minimum mean square error (MMSE), and the like with the use of the propagation channel estimation value outputted by the propagation channel estimating unit 209, and multiplies the frequency-domain signal outputted by the FFT unit 206 by the weighting factor, to thereby compensate the propagation channel. This process is also referred to as equalization process.

The subcarrier demapping unit 210 performs a demapping process on the signal outputted by the propagation channel compensating unit 207. Specifically, the subcarrier demapping unit 210 extracts only the signal of each subcarrier onto which a desired user (user 1) is mapped, from the signals outputted by the propagation channel compensating unit 207. Note that the receiver 200 can be notified of the arrangement (information allocation information) of the data modulation symbols of the desired user or the pilot symbols mapped onto the subcarriers of the received OFDMA signal, through a control signal and the like.

The signal detecting unit 208-1 extracts only signal of each subcarrier onto which the desired user (user 1) is mapped, from the signals outputted by the propagation channel compensating unit 207, performs thereon demodulation and decoding processes, and acquires the information bits of the user 1. In addition, the signal detecting unit 208-1 outputs only the encoding bit LLR for the information bits of the user 1 to the interference cancelling unit 204. The signal detecting unit 208-1 includes a demodulating unit 221-1, a deinterleaving unit 222-1, and a decoding unit 223-1. The demodulating unit 221-1 extracts an equalized signal of each resource element onto which the data modulation symbol to be transmitted to the desired user is mapped, from the signals (equalized signals) outputted by the propagation channel compensating unit 207, performs a demodulation process on the extracted equalized signal, and outputs a soft-decision value (encoding bit LLR). For example, in the case of the data modulation symbol allocation illustrated in Figure 2, the demodulating unit 221-1 extracts an equalized signal corresponding to the resource element (K1, L1), (K1 = 1,..., 12; L1 = 1, ..., 7; excluding the resource elements in which the pilot symbols are arranged), and performs thereon the demodulation process.

The process performed by the demodulating unit 221-1 is described by taking, as an example, the case where the data modulation symbols to be transmitted to the desired user are QPSK symbols. Description is given assuming that QPSK symbols transmitted on the transmission side are X and that symbols received by the demodulating unit 221 on the reception side are Xc. Assuming that each bit constituting X is $b_0$, $b_1$ ($b_0$, $b_1 = \pm 1$), X can be expressed by the following Expression (2). In the following expression, j represents an imaginary unit. Then, λ(b0), λ(b1) representing a log likelihood ratio LLR of the bit b0, b1 can be obtained by the following Expression (3) on the basis of the estimation value Xc of X on the reception side.

[Expression 2]

$$X = \frac{1}{\sqrt{2}}(b_0 + jb_1)$$ (2)

[Expression 3]

$$\lambda(b_0) = \frac{2\mathrm{Re}(X_c)}{\sqrt{2}(1-\mu)}$$ (3)

In the above expression, Re(Xc) represents a real part of a complex number. $\mu$ represents an equivalent amplitude after propagation channel compensation. For example, assuming that a propagation channel estimation value of the $k^{th}$ subcarrier in the first OFDM symbol is H1(k) and that a multiplied propagation channel compensation weight based on an MMSE criterion is W1(k), $\mu$ is W1(k) · H1 (k).

In addition, λ(b1) is obtained by replacing a real part of Xc with an imaginary part thereof in Expression (3), that is, an expression for obtaining λ(b0). Note that calculation for data subjected to other modulation such as 16QAM is also possible on the basis of a similar principle. In addition, the demodulating unit 222 may calculate a hard-decision result instead of the soft-decision result.

The deinterleaving unit 222-1 rearranges the bit arrangement corresponding to the interleaving pattern made by the interleaving unit 112-1 of the transmitting device 100 as the transmission source, that is, rearranges the bit arrangement so as to follow a reverse procedure to the interleaving pattern, for a data sequence of the soft-decision result outputted by the demodulating unit 221-1.

The decoding unit 223-1 performs an error correction decoding process for the error correction encoding such as the turbo encoding or the convolutional encoding performed by the transmitting device 100 as the transmission source, on the signal outputted by the deinterleaving unit 222-1, calculates a soft-decision output result such as the log likelihood ratio (LLR) of the encoding bit, and inputs the soft-decision result of the desired user to the interference cancelling unit 204.

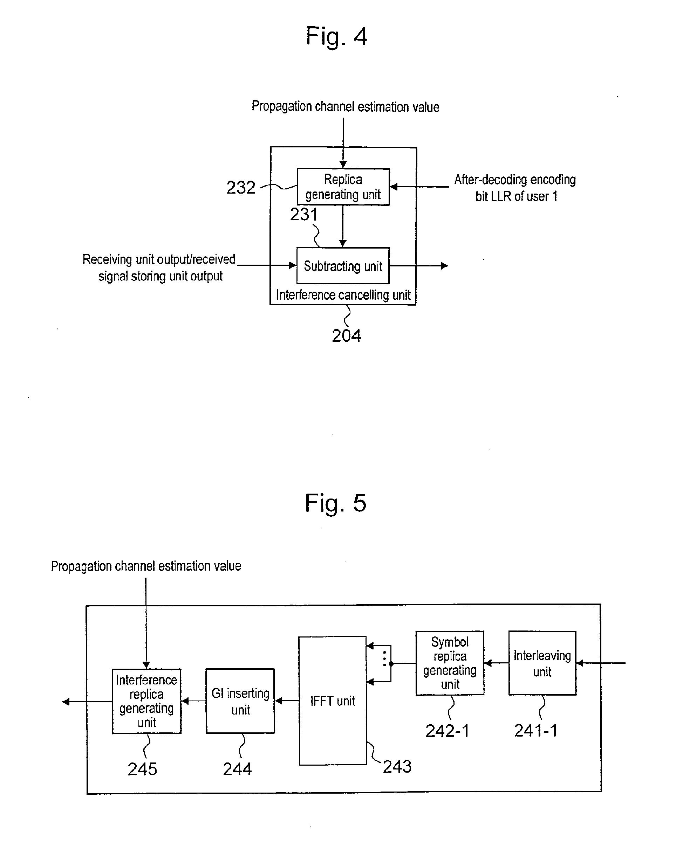

Figure 4 is a functional block diagram illustrating a configuration example of the interference cancelling unit 204. The interference cancelling unit 204 includes a subtracting unit 231 and a replica generating unit 232. The replica generating unit 232 generates a replica of interference components (interference replica) with the use of the propagation channel estimation value and the soft-decision value (the log likelihood ratio (LLR) of the encoding bit) for a data signal of the desired user. Specifically, the replica generating unit 232 generates a replica of a signal that is likely to have been transmitted by the transmitting device 100 (as the transmission source of the received signal) to its own receiving device, with the use of a log likelihood ratio (LLR) of each after-decoding encoding bit, the LLR being outputted by the signal detecting unit 208-1. That is, the receiving device 200 generates a replica of a transmitted signal for the user 1, the transmitted signal being likely to have been transmitted by the transmitting device 100. Further, the replica generating unit 232 generates an interference replica with the use of this transmitted signal replica and the propagation channel estimation value outputted by the propagation channel estimating unit 209. The subtracting unit 231 subtracts the interference replica from the signal inputted by the receiving unit 202 or the received signal storing unit 203. Assuming that the signal inputted by the receiving unit 202 or the received signal storing unit 203 is r(t) and that the interference replica in the $i^{th}$ iterative process is r^i(t), a signal r~i(t) outputted by the subtracting unit can be expressed by the following Expression (4). Note that "r^" and "r~" respectively mean signs of a letter "r" above which "^" or "~" is put as expressed in Expression (4), and the same applies to "s^", "c^", and "h^" to be described later.

[Expression 4]

$$\tilde{r}_i(t) = r(t) - \hat{r}_i(t) \qquad (4)$$

In the above expression, r~i(t) = r(t) in the first process (i = 0).

Figure 5 is a functional block diagram illustrating a configuration example of the replica generating unit 232. The replica generating unit 232 includes an interleaving unit 241-1, a symbol replica generating unit 242-1, an IFFT unit 243, a GI inserting unit 244, and an interference replica generating unit 245.

The interleaving unit 241-1 rearranges, into the same order as that of the encoded data signals subjected to data modulation by the transmitting device 100, the order of the log likelihood ratios (LLRs) of the after-decoding encoding bits, the LLRs being outputted by the signal detecting unit 208-1. That is, according to the same interleaving pattern as that of the interleaving unit 112-1 of the transmitting device 100, the interleaving unit 241-1 interleaves the log likelihood ratios (LLRs) of the after-decoding encoding bits, the LLRs being outputted by the signal detecting unit 208-1. That is, the interleaving unit 241-1 performs such rearrangement in a reverse procedure to that of the deinterleaving unit 223-1 included in the signal detecting unit 208-1.

The symbol replica generating unit 242-1 generates a replica of each data modulation symbol (modulation symbol replica) for the signal of the desired user with the use of the log likelihood ratio (LLR) of the encoding bit, the LLR being outputted by the interleaving unit 241-1. For example, in the case where the modulation scheme of the modulating unit 113-1 of the transmitting device 100 is QPSK, assuming that the log likelihood ratio of the bit b0, b1 constituting a QPSK symbol is λ(b0), λ(b1), the symbol replica generating unit 242-1 generates a replica symbol of the QPSK symbol expressed in the following Expression (5). Note that the symbol replica generating unit 242-1 generates a modulation symbol replica on the basis of a similar principle even in the case of other modulation such as 16QAM.

[Expression 5]

$$\frac{1}{\sqrt{2}} \tanh\left(\lambda(b_0)/2\right) + \frac{j}{\sqrt{2}} \tanh\left(\lambda(b_1)/2\right) \qquad (5)$$

The IFFT unit 243 maps each modulation symbol replica outputted by the symbol replica generating unit 242 onto the IFFT input point associated with the resource element to which the data modulation symbol (the data modulation symbol of the user 1) corresponding to this modulation symbol replica is allocated in the received OFDMA signal, and performs an IFFT process, to thereby convert this modulation symbol replica of the desired user (this modulation symbol replica of the desired user) from a frequency-domain signal into a time-domain signal. In addition, the IFFT unit 243 nulls the IFFT input point corresponding to each resource element in which the data modulation symbol of an undesired user is arranged in the received OFDMA signal (sets zero thereto). Further, it is preferable that the IFFT unit 243 arrange this pilot symbol in the IFFT input point corresponding to each resource element in which the pilot symbol as a known signal has been arranged.

For example, in the case where the data modulation symbols of each user are allocated according to the user allocation in Figure 2 in the received OFDMA signal, the IFFT unit 243 allocates each modulation symbol replica outputted by the symbol replica generating unit 242 to the IFFT input point corresponding to the resource element (K1, L1), (K1 = 1, ..., 12; L1 = 1, ..., 7; excluding the resource elements in which the pilot symbols are arranged).

The GI inserting unit 244 adds a guard interval (GI) to the time-domain signal obtained by the conversion by the IFFT unit 243. A signal replica s^i(t) outputted by the GI inserting unit 245 can be expressed by the following Expression (6).

[Expression 6]

$$\hat{s}(t) = \frac{1}{\sqrt{N_f}} \sum_{l=-\infty}^{\infty} \sum_{k=0}^{N_f-1} \hat{c}_{k,l} e^{jk\Delta_f(t-lT_s)} \qquad (6)$$

In the above expression, c^k,1 represents the modulation symbol replica of the desired user. Note that known symbols such as the pilot symbols may be contained. In the case of the user allocation illustrated in Figure 2, a modulation symbol replica c^K1, L1 of the user 1 is allocated to a subcarrier position of a resource element in which a modulation symbol cK1, L1 is arranged. In addition, a pilot symbol c^Kp, Lp is allocated to a subcarrier position of a resource element in which a pilot symbol cKp, Lp is arranged. In this way, the generation of the transmitted signal replica does not depend on the signal arrangement of a user other than the desired user. Accordingly, interference can be removed without any significant prolongation of the processing time of a turbo equalization process for the desired user.

The interference replica generating unit 245 generates an interference replica of interference components occurring in the OFDMA signal received by the receiving device 200, with the use of the signal outputted by the GI inserting unit 244 and the propagation channel estimation value. Examples of the interference components include inter symbol interference and inter carrier interference, and the interference replica generating unit 245 generates an interference replica for each interference component.

For example, in the case where the inter symbol interference occurs in the OFDMA signal, assuming that the signal that is outputted by the GI inserting unit 244 in the $i^{th}$ iterative process of the interference cancelling unit 204 is s^i(t) and that the propagation channel estimation value is h^(t), an inter symbol interference replica r^i(t) (t ≤ Ts; Ts represents an OFDM symbol length) generated by the interference replica generating unit 245 is expressed by the following Expression (7). That is, the interference replica r^i is generated using the transmitted signal replica for the desired user, the transmitted signal replica being generated from the encoding bit LLR outputted by the signal detecting unit 208-1 in the $i-1^{th}$ iterative process. Further, the interference replica r^i is obtained by adding a replica of components of the OFDM symbol before an OFDM symbol as an FFT process target in each delayed wave that is received by the receiving device and has a delay time beyond the GI, the components entering a interval of the OFDM symbol as the FFT process target. A process of subtracting the interference replica thus generated is performed on the resource elements occupied by the user 1, whereby the inter symbol interference is removed. Note that the control signal for the desired user and inter symbol interference in the pilot symbols can be removed in a similar manner.

[Expression 7]

$$\hat{r}_i(t) = \sum_d \hat{h}_d(t)\hat{s}_{i-1}\left(t - (\tau_d - T_{gi})\right) \qquad (7)$$

In the above expression, r^0(t) = 0 in the first process (i = 0), h^d represents an impulse response of the propagation channel estimation value as well as a complex amplitude of a $d^{th}$ path, t represents time, $\tau_d$ represents a delay time from a time point (a synchronization point of the FFT process) at which a first path (preceding wave) of the $d^{th}$ path ($d^{th}$ delayed wave) arrives, and Tgi represents the length of an inserted guard interval. Note that d satisfies a relation of $\tau_d > T_{gi}$.

Note that description is given above of the case where the inter symbol interference is removed by subtracting the time-domain interference replica from the received signal, but the present embodiment is not limited to the case. For example, the inter symbol interference may be removed using a frequency-domain interference replica in addition to the time-domain interference replica.

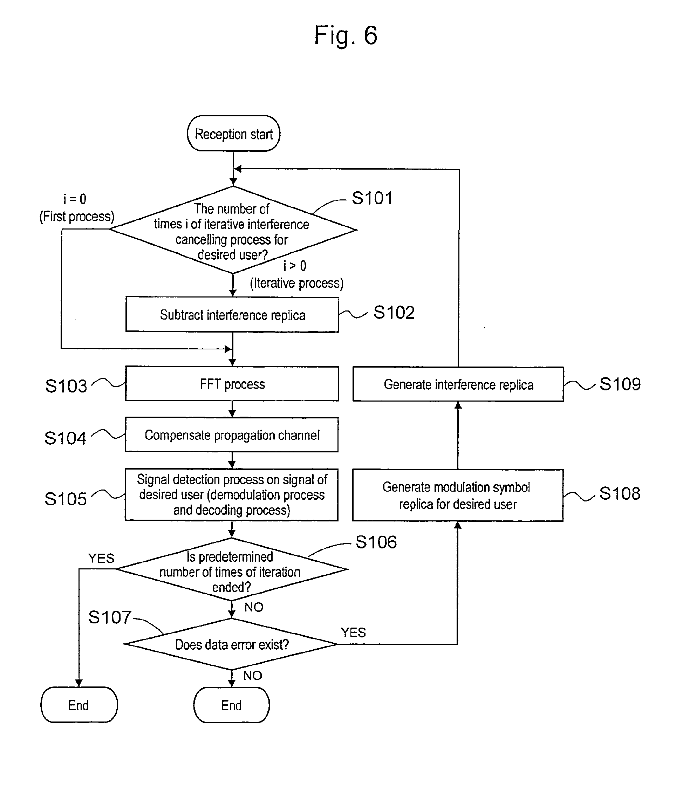

Figure 6 is a flow chart for describing an operation of the receiving device 200. Upon the reception of the OFDMA signal transmitted by the transmitting device 100, the receiving device 200 determines the number of times of iteration in the iterative interference cancellation process of the interference cancelling unit 204 (S101). In the case of the first process (i = 0), the receiving device 200 outputs the received OFDMA signal without any change. This signal is inputted to the FFT unit 206 after the process of the GI removing unit 205. On the other hand, in the case of the iterative process (i > 0), the receiving device 200 removes interference from the signal of the desired user with the use of the interference replica that is generated from the encoding bit LLR calculated in the decoding process for the desired user in the i-1 th iterative process (S102).

Next, the receiving device 200 causes the FFT unit 206 to perform an FFT process on the signal subjected to the processes in S101 and S102 (S103), and causes the propagation channel compensating unit 207 to compensate propagation channel distortion (perform an equalization process) on the signal converted into a frequency domain (S104). The receiving device 200 extracts an equalized signal for the desired user from the frequency-domain signals (equalized signals) subjected to the equalization process, and performs thereon a demodulation process and a decoding process (S105). After that, if a predetermined number of times of iteration is ended in the interference cancellation process (YES in S106), the receiving device 200 delivers a hard decision result of a desired decoding process result to the MAC unit and the like, ends the process, and stands by for the next data reception. On the other hand, if the predetermined number of times of iteration is not ended (NO in S 106), the receiving device 200 determines whether or not an error exists in the data signal of the desired user (S107). If the error does not exist, the receiving device 200 delivers the hard decision result of the desired decoding process result to the MAC unit and the like, ends the process, and stands by for the next data reception. On the other hand, if the error exists, the receiving device 200 generates a modulation symbol replica for the desired user with the use of the encoding bit LLR outputted by the decoding unit 223-1 (S108). Then, the receiving device 200 generates an interference replica with the use of the modulation symbol replica for the desired user (S109), inputs the generated interference replica to the interference cancelling unit 204, and performs thereon an interference cancellation process again (returns to Step S101). That is, the receiving device 200 iterates the process until any of the following conditions is satisfied: the process is iterated a preset number of times; and it is determined that the error in the data signal does not exist.

As described above, in the present embodiment, in the case where the transmitting device 100 transmits the OFDMA signal and where the receiving device 200 receives the OFDMA signal with a long delay beyond the guard interval, the iterative interference cancellation process is performed using the interference replica generated from part of the decoding results.

In this way, the turbo equalization process (iterative process) for the desired user can be performed without an influence of the occupied area of the resource elements to which the undesired user is allocated in the OFDMA signal. Accordingly, it is advantageously possible to suppress a delay in the turbo equalization process due to a difference in the occupied area of the resource elements between the desired user and the undesired user.

In addition, because information data is encoded for each user, even in the case where the number of OFDM symbols occupied by the undesired user is larger than the number of OFDM symbols occupied by the desired user, the turbo equalization process for the desired user can be performed without restriction by the decoding process time for the undesired user. That is, the receiving device can avoid the occurrence of such a trouble that, in spite of the state where the decoding process on the signal of its own user has been ended, subsequent processes such as the generation of the inter symbol interference replica cannot be performed because the decoding process on the signal of the other user has not been ended. As a result, it is possible to suppress the prolongation of processing time required for acquiring final information data for the signal of the desired user and to suppress an increase in power consumption as well as a decrease in efficiency of the receiver.

In addition, the inter symbol interference and the inter subcarrier interference can be removed without any prolongation of the turbo equalization process time even if the number of bits of the encoding blocks is different among the plurality of users, whereby transmission characteristics can be improved. In particular, even in the case where the number of bits of the encoding blocks of the undesired user is larger than the number of bits of the encoding blocks of the desired user, the turbo equalization process can be performed on the basis of the number of bits of the encoding blocks of the desired user.

In addition, in the case where the time allowed for the iterative process is fixed, it is possible to prevent a decrease in the number of times of iteration of the turbo equalization on the signal of its own user due to an influence of the decoding process time for the signal of the other user, whereby a decrease in error rate characteristics can be suppressed. Note that, in the present embodiment, description is given of the case where the inter symbol interference is removed, but the present embodiment is not limited thereto. For example, inter subcarrier interference can be similarly removed from the received signal by generating an interference replica of the inter subcarrier interference with the use of the data modulation replica for the signal of the desired user. In addition, in the present embodiment, description is given of the case where the plurality of users are allocated to the same transmission frame, but the present embodiment can also be applied to the case where a user is allocated across a plurality of transmission frames.

(Second Embodiment)

A communication system according to a second embodiment of the present invention includes the transmitting device 100 and a receiving device 400 that receives an OFDMA signal transmitted by the transmitting device 100. The receiving device 400 is described below.

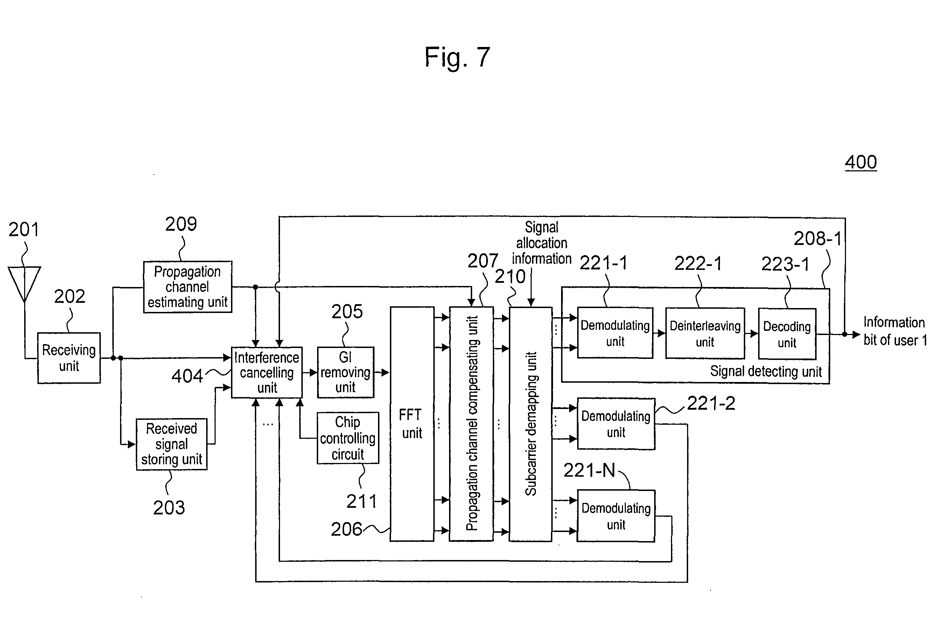

Figure 7 is a functional block diagram illustrating a configuration example of the receiving device 400 according to the second embodiment of the present invention. Description is given assuming that the receiving device 400 is mounted on the mobile terminal of the user 1, the mobile terminal receiving the signal transmitted by the transmitting device 100. Note that the receiving device mounted on the mobile terminal of the user n (n = 1, 2,..., N) can have at least the same function.

The receiving device 400 includes the receiving unit 202, the received signal storing unit 203, an interference cancelling unit 404, the GI removing unit 205, the FFT unit 206, the propagation channel compensating unit 207, the subcarrier demapping unit 210, the signal detecting unit 208-1, the propagation channel estimating unit 209, and demodulating units 221-2 to 221-N, and the antenna unit 201 is connected to the receiving unit 202. If a part or the entirety of the receiving device 400 is implemented on a chip as an integrated circuit, the receiving device 400 further includes the chip controlling circuit 211 that controls the respective functional blocks.

Components having functions equivalent to those of the receiving device 200 of the first embodiment are denoted by the same reference signs. The receiving device 400 is different from the receiving device 200 in that the interference cancelling unit 404 replaces the interference cancelling unit 204 and that the demodulating unit 221-2 to the demodulating unit 221-N are added. Description is given below mainly of the components having functions different from those of the receiving device 200.

In the case of the iterative process (i > 0), the interference cancelling unit 404 performs an interference cancellation process with the use of the signals outputted by the signal detecting unit 208-1, the demodulating unit 221-1 to the demodulating unit 221-N, and the propagation channel estimating unit 209.

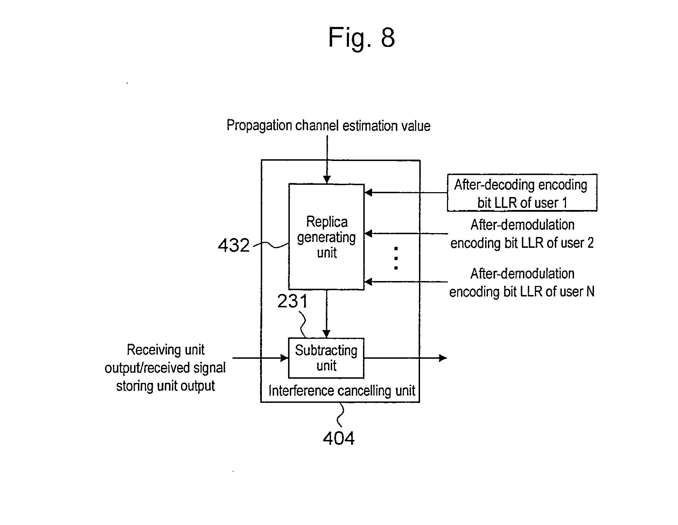

Figure 8 is a functional block diagram illustrating a configuration example of the interference cancelling unit 404. The interference cancelling unit 404 includes the subtracting unit 231 and a replica generating unit 432. The replica generating unit 432 generates an interference replica with the use of: an after-decoding encoding bit LLR of the user 1 outputted by the decoding unit 223-1; and after-demodulation encoding bit LLRs outputted by the demodulating unit 221-2 to the demodulating unit 221-N. The subtracting unit 231 subtracts the interference replica from the signal inputted by the receiving unit 202 or the received signal storing unit 203.

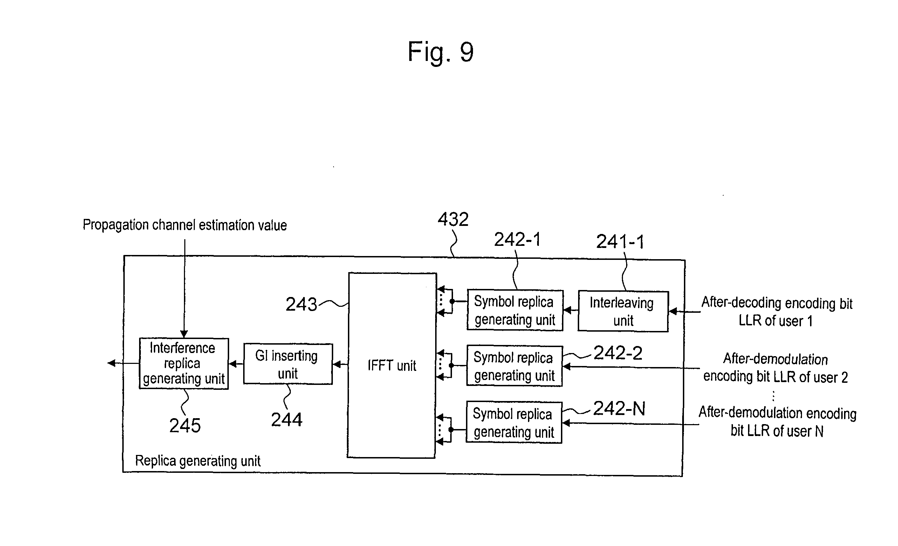

Figure 9 is a functional block diagram illustrating a configuration example of the replica generating unit 432. The replica generating unit 432 includes the interleaving unit 241-1, the symbol replica generating unit 242-1, symbol replica generating units 242-2 to 242-N, the IFFT unit 243, the GI inserting unit 244, and the interference replica generating unit 245.

The symbol replica generating unit 242-1 generates a replica of each data modulation symbol (modulation symbol replica) for the signal of the user 1 with the use of the encoding bit LLR that is obtained by interleaving, by the interleaving unit 241-1, the after-decoding encoding bit LLR outputted by the decoding unit 223-1.

The subcarrier demapping unit 210 performs a demapping process on the signal outputted by the propagation channel compensating unit 207. Specifically, the subcarrier demapping unit 210 extracts only the signal of each subcarrier onto which a desired user (user 1) is mapped, from the signals outputted by the propagation channel compensating unit 207, and inputs the extracted signal to the signal detecting unit 208-1. In addition, the subcarrier demapping unit 210 extracts the signal of each subcarrier onto which an undesired user is mapped, and inputs the extracted signal to the demodulating unit 221-2 to the demodulating unit 221-N.

The symbol replica generating unit 242-n (n = 2, ..., N) generates a replica of each modulation symbol (modulation symbol replica) corresponding to the signal of the user n with the use of the after-demodulation encoding bit LLR of the user n outputted by the demodulating unit 221-n (n = 2,..., N).

The IFFT unit 243 maps each modulation symbol replica outputted by the symbol replica generating unit 242-n (n = 1, 2, ..., N) onto the IFFT input point associated with the resource element to which the data modulation symbol corresponding to this modulation symbol replica is allocated in the received OFDMA signal, and performs an IFFT process. The signal replica that is obtained by adding, by the GI inserting unit 244, the GI to the signal after the IFFT process is expressed by Expression (6) given above. In Expression (6), $c^k,l$ represents the modulation symbol replica generated by each of the symbol replica generating units 242-1 to 242-N.

That is, the replica generating unit 432 generates only the modulation symbol replica corresponding to each data modulation symbol of the desired user from the after-decoding encoding bit LLR, and generates the modulation symbol replica corresponding to each data modulation symbol of the undesired user from the after-demodulation encoding bit LLR. Then, the replica generating unit 432 generates an interference replica with the use of the modulation symbol replicas corresponding to the received data modulation symbols of all the users. In the case where the receiving device 400 receives the OFDMA signal in which the plurality of users are allocated as illustrated in Figure 2 and where the turbo equalization process is applied to the first to seventh OFDM symbols, the modulation symbol replica generated from the after-decoding encoding bit LLR is arranged in each resource element occupied by the user 1, and the modulation symbol replica generated from the after-demodulation encoding bit LLR is arranged in each resource element occupied by the user 3, whereby a transmitted signal replica is generated.

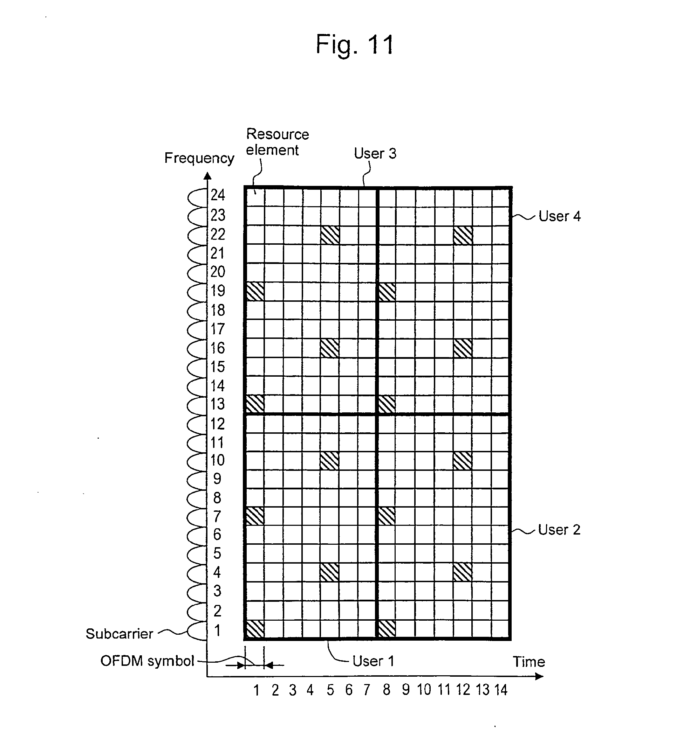

Further, if a given OFDM symbol to which the turbo equalization process is applied is subjected to interference of the OFDM symbol following after the given OFDM symbol, the modulation symbol replica corresponding to the data modulation symbol arranged in this following OFDM symbol can be used. For example, in the case where the turbo equalization is applied to the seventh OFDM symbol, the transmitted signal replica can be similarly generated using the after-demodulation modulation symbol replica corresponding to a data modulation symbol of the user 2, the data modulation symbol being arranged in the eighth OFDM symbol. Figure 11 is a diagram illustrating another example in which data modulation symbols of a plurality of users and pilot symbols are mapped onto resource elements. In the case where the receiving device 400 receives an OFDMA signal in which the plurality of users are allocated as illustrated in Figure 11 and where the turbo equalization process is performed on the first to seventh OFDM symbols occupied by the user 1, the modulation symbol replica generated from the after-decoding encoding bit LLR is arranged in each resource element occupied by the user 1, and the modulation symbol replica generated from the after-demodulation encoding bit LLR is arranged in each resource element occupied by the user 3, whereby a transmitted signal replica is generated. In addition, in the case where the turbo equalization is applied to the seventh OFDM symbol, the transmitted signal replica can be similarly generated using the after-demodulation modulation symbol replicas corresponding to data modulation symbols of the user 2 and the user 4 arranged in the eighth OFDM symbol.

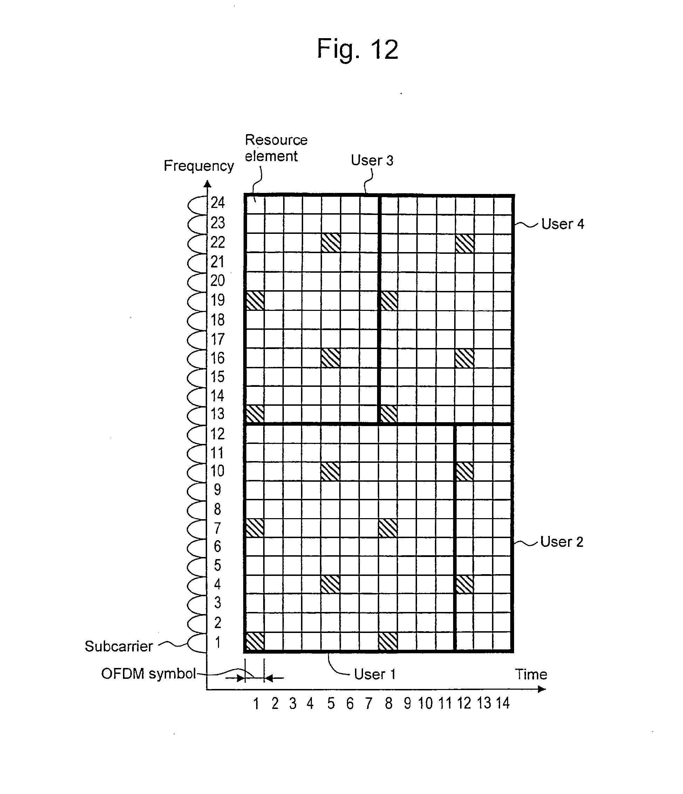

Figure 12 is a diagram illustrating another example in which data modulation symbols of a plurality of users and pilot symbols are mapped onto resource elements. In the case where the receiving device 400 receives an OFDMA signal in which the plurality of users are allocated as illustrated in Figure 12 and where the turbo equalization process is performed on the first to eleventh OFDM symbols occupied by the user 1, the modulation symbol replica generated from the after-decoding encoding bit LLR is arranged in each resource element occupied by the user 1, and the modulation symbol replica generated from the after-demodulation encoding bit LLR is arranged in each resource element occupied by the user 3 and the user 4, whereby a transmitted signal replica is generated. In addition, in the case where the turbo equalization is applied to the eleventh OFDM symbol, the transmitted signal replica can be similarly generated using the after-demodulation modulation symbol replica corresponding to a data modulation symbol of the user 2 arranged in the twelfth OFDM symbol.

In this way, the modulation symbol replica for the undesired user can be generated without any significant prolongation of the processing time of the turbo equalization process for the desired user.

The demodulating units 221-2 to 221-N each extract an equalized signal of each resource element onto which the data modulation symbol to be transmitted to the undesired user is mapped, from the equalized signals outputted by the propagation channel compensating unit 207, performs a demodulation process on the extracted equalized signal, and inputs a soft-decision value (after-demodulation encoding bit LLR) to the interference cancelling unit 404.

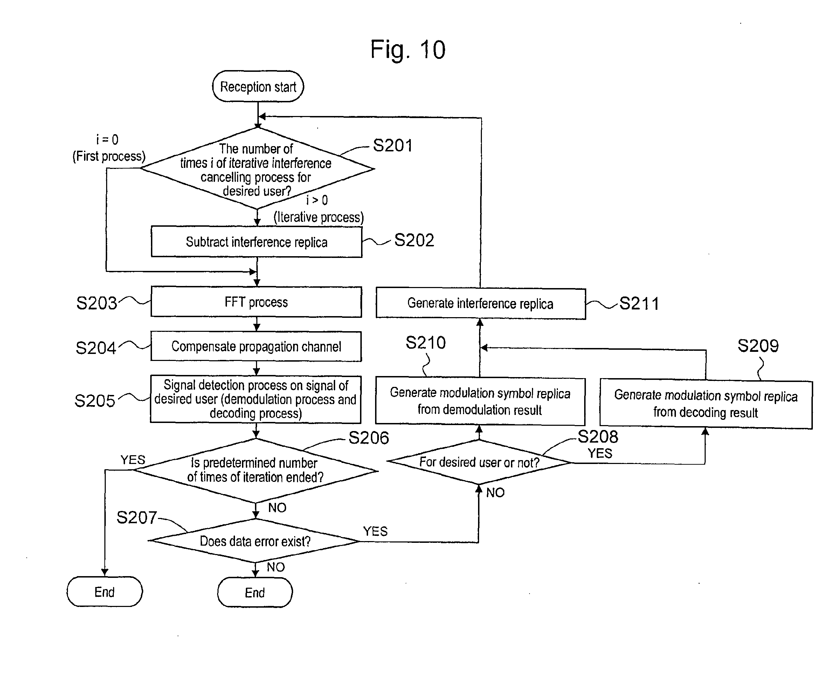

Figure 10 is a flow chart for describing an operation of the receiving device 200. Upon the reception of the OFDMA signal transmitted by the transmitting device 100, the receiving device 200 determines the number of times of iteration in the iterative interference cancellation process of the interference cancelling unit 404 (S201). In the case of the first process (i = 0), the receiving device 400 outputs the received OFDMA signal without any change. This signal is inputted to the FFT unit 206 after the process of the GI removing unit 205. On the other hand, in the case of the iterative process (i > 0), the receiving device 400 removes interference with the use of the interference replica that is generated from: the encoding bit LLR calculated in the decoding process for the desired user in the $i-1^{th}$ iterative process; and the encoding bit LLR calculated in the demodulation process for the undesired user in the $i-1^{th}$ iterative process (S202).

Next, the receiving device 400 causes the FFT unit 206 to perform an FFT process on the signal subjected to the processes in S201 and S202 (S203), and causes the propagation channel compensating unit 207 to compensate propagation channel distortion (perform an equalization process) on the signal converted into a frequency domain (S204). The receiving device 400 extracts an equalized signal for the desired user from the frequency-domain signals (equalized signals) subjected to the equalization process, and performs thereon a demodulation process and a decoding process (S205). After that, if a predetermined number of times of iteration is ended in the interference cancellation process (YES in S206), the receiving device 400 delivers a hard decision result of a desired decoding process result to the MAC unit and the like, ends the process, and stands by for the next data reception. On the other hand, if the predetermined number of times of iteration is not ended (NO in S206), the receiving device 400 determines whether or not an error exists in the data signal of the desired user (S207). If the error does not exist, the receiving device 400 delivers the hard decision result of the desired decoding process result to the MAC unit and the like, ends the process, and stands by for the next data reception. On the other hand, if the error exists, the receiving device 400 generates a modulation symbol replica. In this case, the receiving device 400 determines whether or not this replica generation corresponds to the data modulation symbol for the desired user (S208). In the case of the modulation symbol replica for the desired user (YES in S208), the receiving device 400 generates the modulation symbol replica from the after-decoding encoding bit LLR outputted by the decoding unit 223-1 (S209). In the case of the modulation symbol replica for the undesired user (NO in S208), the receiving device 400 generates the modulation symbol replica from the after-demodulation encoding bit LLR outputted by each of the demodulating unit 221-2 to the demodulating unit 221-N (S210). Then, the receiving device 200 generates an interference replica with the use of the modulation symbol replica generated for each user in each of S209 and S210 (S211), inputs the generated interference replica to the interference cancelling unit 204, and performs thereon an interference cancellation process again.

That is, the receiving device 400 iterates the process until any of the following conditions is satisfied: the process is iterated a preset number of times; and it is determined that the error in the data signal does not exist. Note that the modulation symbol replicas generated in S210 correspond to a part or the entirety of the modulation symbols to which the modulation symbol replicas generated in S209 do not correspond.

As described above, in the present embodiment, in the case where the transmitting device 100 transmits the OFDMA signal and where the receiving device 400 receives the OFDMA signal with a long delay beyond the guard interval, the modulation symbol replica for the desired user is generated from the decoding result, while the modulation symbol replica for the undesired user is generated from the demodulation result. Then, the iterative interference cancellation process is performed using the interference replica generated from the modulation symbol replicas for the desired user and the undesired user.

In this way, the turbo equalization process (iterative process) for the desired user can be performed without an influence of the occupied area of the resource elements to which the undesired user is allocated in the OFDMA signal. Accordingly, it is advantageously possible to suppress a delay in the turbo equalization process due to a difference in the occupied area of the resource elements between the desired user and the undesired user. Further, the after-modulation encoding bit LLR is used in the interference replica generation for the undesired user. Accordingly, it is advantageously possible to suppress the interference of the signal components of the undesired user with the signal components of the desired user, resulting in suppression of characteristic degradation.

Note that, in the first embodiment and the second embodiment described above, description is given of the case where the present invention is applied to the OFDMA in which the signals of the plurality of users are allocated to the OFDM subcarriers, but the present invention is not limitedly applied thereto and can be applied to communication systems that transmit signals using frequency division multiplexing for users. Examples of such communication systems include multi carrier - code division multiple access (MC-CDMA), single carrier - frequency division multiple access (SC-FDMA), and discrete Fourier transform - spread - OFDMA (DFT-S-OFDMA). Note that, in the embodiments described above, the OFDMA and the transmission schemes exemplified above are referred to as multicarrier modulation.

(Third Embodiment)

In an embodiment of the present invention, description is given, as an example, of the case where a transmitting device transmits a signal of OFDMA occupied by a single user in orthogonal multicarrier.

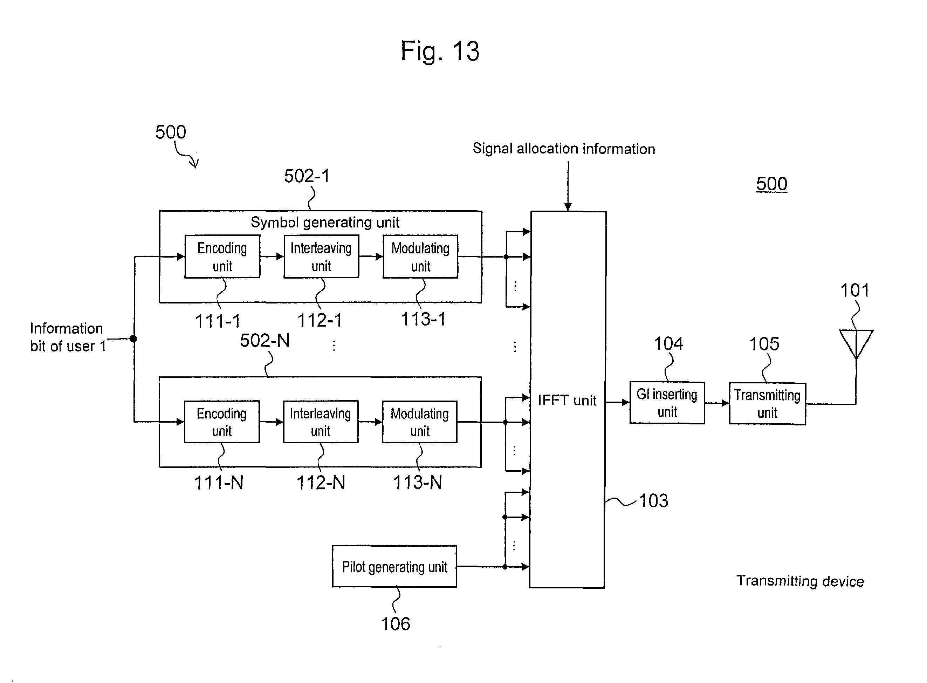

Figure 13 is a functional block diagram illustrating a configuration example of a transmitting device 500 according to a third embodiment of the present invention. The transmitting device 500 includes symbol generating units 502-1 to 502-N, the inverse fast Fourier transform (IFFT) unit 103, the GI inserting unit 104, the transmitting unit 105, and the pilot generating unit 106, and the antenna unit 101 is connected to the transmitting unit 105. Note that N represents the number of encoding blocks for encoding the information bits of the user 1.

The transmitting device 500 is different from the transmitting device 100 in that the symbol generating unit 502-n (n = 1, 2, ..., N) replaces the symbol generating unit 102-n. The symbol generating unit 502-n is different from the symbol generating unit 102-n in that the information bits of the same user are inputted.

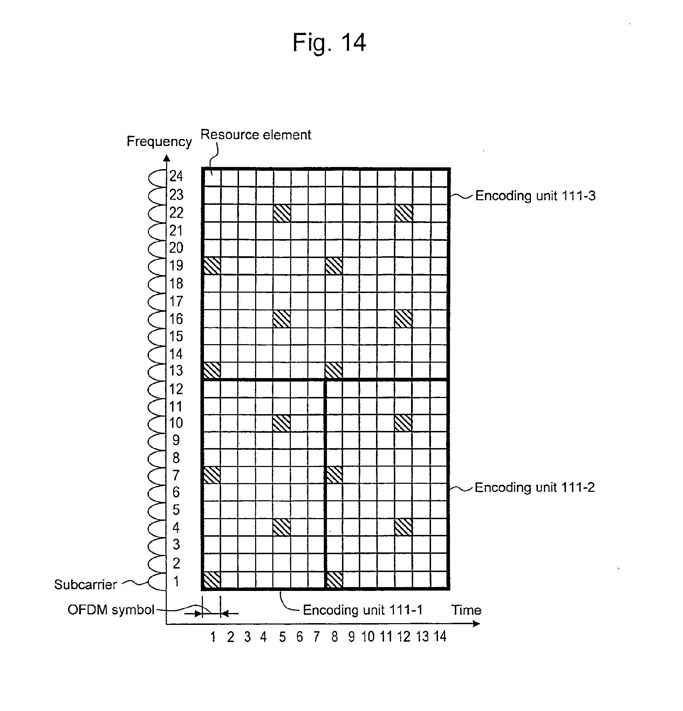

Figure 14 is a diagram illustrating an example in which data modulation symbols of the user 1 inputted by the symbol generating unit 502-n (n = 1, 2, 3) and pilot symbols are mapped onto the input points of the IFFT unit 103.

The pilot symbols are arranged in the shaded resource elements. The data modulation symbols onto which the encoding bits encoded by the encoding unit 111-1 are mapped are arranged in the resource elements (K1, L1), (K1 = 1, ..., 12; L1 = 1, ..., 7; excluding the resource elements in which the pilot symbols are arranged). The data modulation symbols onto which the encoding bits encoded by the encoding unit 111-2 are mapped are arranged in the resource elements (K2, L2), (K2 = 1, ..., 12; L2 = 8, ..., 14; excluding the resource elements in which the pilot symbols are arranged). The data modulation symbols onto which the encoding bits encoded by the encoding unit 111-3 are mapped are arranged in the resource elements (K3, L3), (K3 = 13, ..., 24; L3 = 1, ..., 14; excluding the resource elements in which the pilot symbols are arranged).

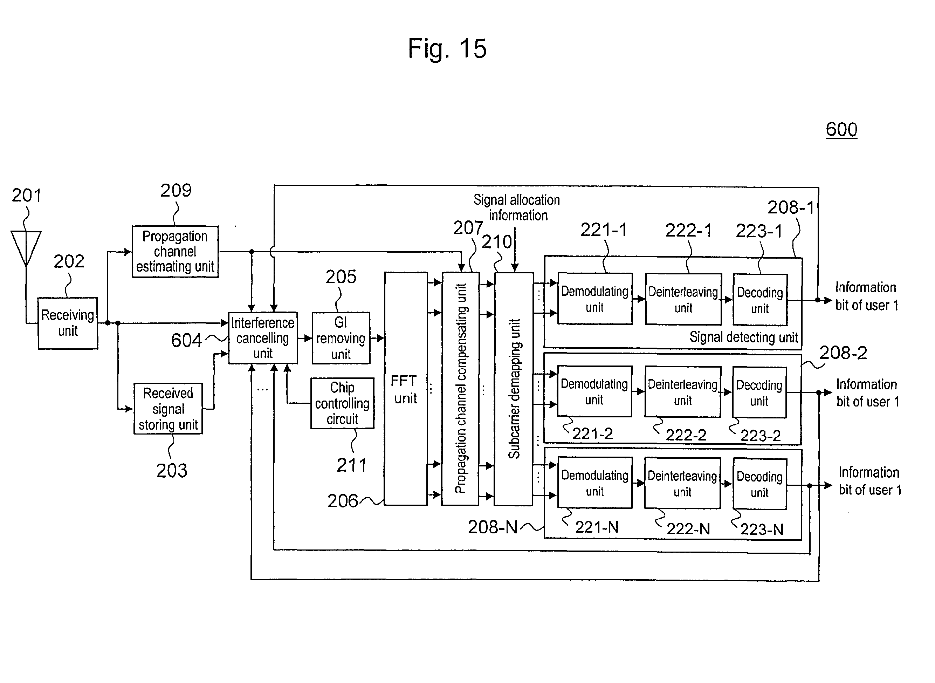

Figure 15 is a functional block diagram illustrating a configuration example of a receiving device 600 according to the third embodiment of the present invention. Description is given assuming that the receiving device 600 is mounted on the mobile terminal that receives the signal transmitted by the transmitting device 500.

The receiving device 600 includes the receiving unit 202, the received signal storing unit 203, an interference cancelling unit 604, the GI removing unit 205, the FFT unit 206, the propagation channel compensating unit 207, the subcarrier demapping unit 210, signal detecting units 208-1 to 208-N, and the propagation channel estimating unit 209, and the antenna unit 201 is connected to the receiving unit 202. If a part or the entirety of the receiving device 600 is implemented on a chip as an integrated circuit, the receiving device 600 further includes the chip controlling circuit 211 that controls the respective functional blocks.

Components having functions equivalent to those of the receiving device 200 of the first embodiment are denoted by the same reference signs. The receiving device 600 is different from the receiving device 200 in that the interference cancelling unit 604 replaces the interference cancelling unit 204 and that the signal detecting unit 221-2 to the signal detecting unit 221-N are added. Description is given below mainly of the components having functions different from those of the receiving device 200.

In the case of the iterative process (i > 0), the interference cancelling unit 604 performs an interference cancellation process with the use of the signal outputted by at least one of the signal detecting unit 208-1 to the signal detecting unit 208-N and the signal outputted by the propagation channel estimating unit 209.

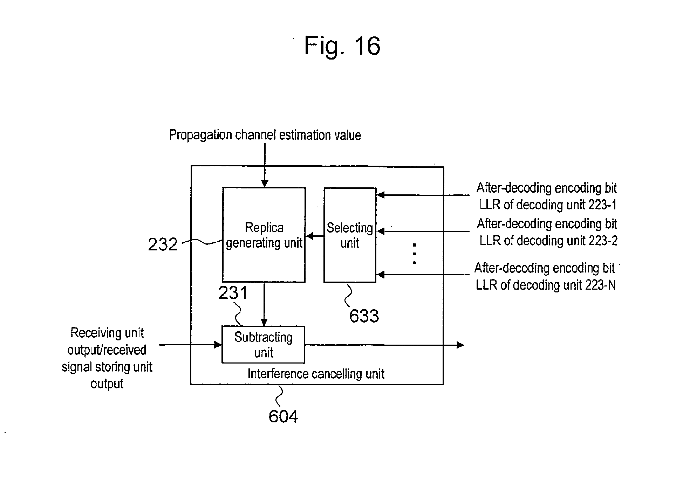

Figure 16 is a functional block diagram illustrating a configuration example of the interference cancelling unit 604. The interference cancelling unit 604 includes the subtracting unit 231, the replica generating unit 232, and a selecting unit 633. The selecting unit 633 receives the after-decoding encoding bit LLRs outputted by the decoding unit 223-1 to the decoding unit 223-N, selects an after-decoding encoding bit LLR for a desired encoding block, and outputs the selected LLR to the replica generating unit 232. For example, in the case where information data of a signal encoded by the encoding unit 111-1 is to be calculated through the turbo equalization process, the selecting unit 633 selects only the after-decoding encoding bit LLR outputted by the decoding unit 223-1 that decodes each data modulation symbol arranged in the resource element (K1, L1) in Figure 10-4. The replica generating unit 232 generates an interference replica with the use of only the after-decoding encoding bit LLR outputted by the selecting unit 633. The replica generating unit 232 has a function equivalent to that in Figure 5. The subtracting unit 231 subtracts this interference replica from the signal inputted by the receiving unit 202 or the received signal storing unit 203.

The subcarrier demapping unit 210 performs a demapping process on the signal outputted by the propagation channel compensating unit 207. Specifically, the subcarrier demapping unit 210 inputs, for each encoding block, the signal outputted by the propagation channel compensating unit 207 to corresponding one of the signal detecting unit 208-1 to the signal detecting unit 208-N. That is, the signal encoded by the encoding unit 111-n (n = 1, 2,..., N) is decoded by the signal detecting unit 208-n.

Each signal detecting unit 208-n outputs the after-decoding encoding bit LLR obtained by its own calculation to the interference cancelling unit 604.

In this way, the generation of the transmitted signal replica does not depend on the signal arrangement of an undesired encoding block. Accordingly, interference can be removed without any significant prolongation of the processing time of the turbo equalization process for the signal of the desired encoding block.

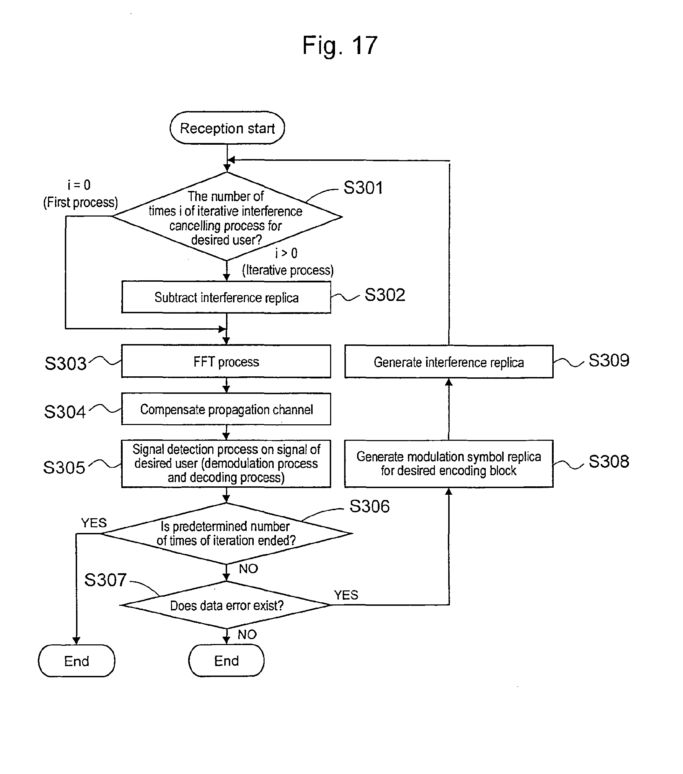

Figure 17 is a flow chart for describing an operation of the receiving device 600. Upon the reception of the OFDM signal transmitted by the transmitting device 400, the receiving device 600 determines the number of times of iteration in the iterative interference cancellation process of the interference cancelling unit 604 (S301). In the case of the first process (i = 0), the receiving device 600 outputs the received OFDM signal without any change. This signal is inputted to the FFT unit 206 after the process of the GI removing unit 205. On the other hand, in the case of the iterative process (i > 0), the receiving device 600 removes interference from the signal of the desired user with the use of the interference replica that is generated from the encoding bit LLR calculated in the decoding process for the desired encoding block in the i-1$^{th}$ iterative process (S302).

Next, the receiving device 600 causes the FFT unit 206 to perform an FFT process on the signal subjected to the processes in S301 and S302 (S303), and causes the propagation channel compensating unit 207 to compensate propagation channel distortion (perform an equalization process) on the signal converted into a frequency domain (S304). The receiving device 600 extracts an equalized signal for the desired user from the frequency-domain signals (equalized signals) subjected to the equalization process, and performs thereon a demodulation process and a decoding process (S305). After that, if a predetermined number of times of iteration is ended in the interference cancellation process (YES in S306), the receiving device 600 delivers a hard decision result of a desired decoding process result to the MAC unit and the like, ends the process, and stands by for the next data reception. On the other hand, if the predetermined number of times of iteration is not ended (NO in S306), the receiving device 600 determines whether or not an error exists in the data signal of the desired user (S307). If the error does not exist, the receiving device 600 delivers the hard decision result of the desired decoding process result to the MAC unit and the like, ends the process, and stands by for the next data reception. On the other hand, if the error exists, the receiving device 600 generates a modulation symbol replica for the desired encoding block with the use of the encoding bit LLR for the desired encoding block among the encoding bit LLRs outputted by the decoding unit 223-1 to the decoding unit 223-N (S308). Then, the receiving device 600 generates an interference replica with the use of the modulation symbol replica for the desired encoding block (S309), inputs the generated interference replica to the interference cancelling unit 604, and performs thereon an interference cancellation process again (returns to Step S301). That is, the receiving device 600 iterates the process until any of the following conditions is satisfied: the process is iterated a preset number of times; and it is determined that the error in the data signal does not exist.

As described above, in the present embodiment, in the case where the transmitting device 400 transmits the OFDM signal and where the receiving device 600 receives the OFDM signal with a long delay beyond the guard interval, the iterative interference cancellation process is performed using the interference replica generated from part of the decoding results. That is, the iterative interference cancellation process is performed using the interference replica generated from only the decoding result of the desired encoding block.

In this way, the turbo equalization process (iterative process) for the desired encoding block can be performed without an influence of the occupied area of the resource elements to which the undesired encoding block is allocated in the OFDM signal. Accordingly, it is advantageously possible to suppress a delay in the turbo equalization process due to a difference in the occupied area of the resource elements between the desired encoding block and the undesired encoding block.

In addition, even in the case where the number of OFDM symbols occupied by one encoding block is different from that occupied by another encoding block, the turbo equalization process for the desired encoding block can be performed without restriction by the decoding process time for the undesired encoding block. As a result, it is possible to suppress the prolongation of processing time required for acquiring final information data for the signal of the desired encoding block and to suppress an increase in power consumption as well as a decrease in efficiency of the receiver.

In addition, the embodiments described above are not limited to configurations and the like illustrated in the attached drawings, and can be changed as appropriate within a range within which advantageous effects of the present invention can be obtained. Moreover, the embodiments described above can be changed and carried out as appropriate within a range not departing from the objective range of the present invention.

In addition, a program for implementing the functions described in the present embodiments is recorded in a computer-readable recording medium, and the program recorded in the recording medium is read into a computer system to be executed, whereby the processes of the respective units may be performed. Note that the "computer system" here includes an OS and hardware such as a peripheral device.

In addition, the "computer system" here includes website providing environments (or display environments) in the case where a WWW system is utilized.

In addition, the "computer-readable recording medium" here refers to a memory device such as a portable medium (for example, a flexible disk, a magneto-optical disk, a ROM, and a CD-ROM) and a hard disk built in the computer system. The "computer-readable recording medium" here further refers to: a medium that dynamically holds the program for a short time (for example, a communication channel that is used at the time of program transmission through a network such as the Internet or through a communication line such as a telephone line); and a medium that holds the program for a given period of time (for example, a volatile memory in the computer system serving as a server or a client at the time of the program transmission). In addition, the program may be used to implement part of the functions described above, and may be used to implement the functions described above in combination with a program that has been recorded in the computer system.

In addition, the functions of the entirety or a part of the transmitting devices in Figure 1 and Figure 13 and the functions of the entirety or a part of the receiving devices in Figure 3, Figure 4, Figure 5, Figure 7, Figure 8, Figure 9, Figure 13, Figure 15, and Figure 16 may be collectively implemented on an integrated circuit. The respective functional blocks of the transmitting devices and the receiving devices may be individually implemented on a chip, and a part or the entirety thereof may be integrated on a chip. In addition, the chip controlling circuit that controls the respective on-chip functional blocks of the transmitting devices and the receiving devices may be integrated together. The chip controlling circuit controls at least the interference cancelling unit 204, the interference cancelling unit 404, and the interference cancelling unit 604. A technique of making a specified and integrated circuit is not limited to an LSI, but may be implemented by a dedicated circuit or a general-purpose processor. In addition, if a new technique of making an integrated circuit appears as an alternative to the LSI as a result of the progress in semiconductor technology, an integrated circuit according to the new technique can also be used.

Industrial Applicability

The present invention can be applied to a communication device.

All the publications, patents, and patent applications cited in the present description are taken as reference into the present description without any change.

Claims

1. A receiving device comprising:

a receiving unit that receives a multicarrier modulation signal;

an interference cancelling unit that removes a modulation symbol replica generated using a decoding process result, from the signal received by the receiving unit, and outputs the resultant signal; and

a signal detecting unit that decodes the signal outputted by the interference cancelling unit, and outputs the decoding process result, wherein

the interference cancelling unit generates the modulation symbol replica with the use of the decoding process result of part of data modulation symbols constituting the signal received by the receiving unit.

2. The receiving device according to claim 1, wherein

the interference cancelling unit removes interference with the use of the modulation symbol replica corresponding to part of the data modulation symbols constituting the signal received by the receiving unit.

3. The receiving device according to claim 1, wherein

the receiving unit receives the multicarrier modulation signal including the data modulation symbols generated using encoding bits of a plurality of encoding blocks, and

the interference cancelling unit generates the modulation symbol replica with the use of the decoding process result of the data modulation symbols for at least one of the encoding blocks.

4. The receiving device according to claim 3, wherein

the encoding blocks in the multicarrier modulation signal are allocated for each user.

5. The receiving device according to claim 1, wherein

the signal detecting unit decodes only a desired data modulation symbol in the signal outputted by the interference cancelling unit, and outputs the decoding process result.

6. The receiving device according to claim 1, further comprising a demodulating unit that demodulates the signal outputted by the interference cancelling unit, wherein

the interference cancelling unit generates the modulation symbol replica with the use of: the decoding process result of part of the data modulation symbols; and the demodulation process result outputted by the demodulating unit, of another part of the data modulation symbols, the data modulation symbols constituting the signal received by the receiving unit.

7. The receiving device according to claim 6, wherein

the receiving unit receives the multicarrier modulation signal including the data modulation symbols generated using encoding bits of a plurality of encoding blocks, and

the interference cancelling unit generates the modulation symbol replica with the use of: the decoding process result of the data modulation symbols for at least one of the encoding blocks; and the demodulation result of the data modulation symbols for at least another one of the encoding blocks.

8. The receiving device according to claim 1, wherein

the interference cancelling unit comprises:

a symbol replica generating unit that generates the modulation symbol replica with the use of the decoding process result;

an interference replica generating unit that generates an interference replica with the use of the modulation symbol replica and a propagation channel estimation value; and

a subtracting unit that subtracts the interference replica from the signal received by the receiving unit.

9. A receiving method comprising:

a first step of receiving a multicarrier modulation signal;

a second step of removing a modulation symbol replica generated using a decoding process result, from the signal received in the first step, and outputting the resultant signal; and

a third step of decoding the signal outputted in the second step, and outputting the decoding process result, wherein

the second step comprises a step of generating the modulation symbol replica with the use of the decoding process result of part of data modulation symbols constituting the signal received by the receiving unit.

**10.** A communication system comprising:

a transmitting device that transmits a multicarrier modulation signal; and
a receiving device that receives and decodes the signal transmitted by the transmitting device,
the receiving device comprising:

a receiving unit that receives the signal transmitted by the transmitting device;
an interference cancelling unit that removes a modulation symbol replica generated using a decoding process result, from the signal received by the receiving unit, and outputs the resultant signal; and
a signal detecting unit that decodes the signal outputted by the interference cancelling unit, and outputs the decoding process result, wherein

the interference cancelling unit generates the modulation symbol replica with the use of the decoding process result of part of data modulation symbols constituting the signal received by the receiving unit.

**11.** A communication method comprising:

a step of transmitting a multicarrier modulation signal; and
a step of receiving and decoding the signal transmitted by the transmitting device,
the step of receiving and decoding comprising:

a first step of receiving the multicarrier modulation signal;
a second step of removing a modulation symbol replica generated using a decoding process result, from the signal received in the first step, and outputting the resultant signal; and
a third step of decoding the signal outputted in the second step, and outputting the decoding process result, wherein

the second step comprises generating the modulation symbol replica with the use of the decoding process result of part of data modulation symbols constituting the signal received by the receiving unit.

**12.** A receiving circuit comprising:

an interference cancelling circuit that removes a modulation symbol replica generated using a decoding process result, from a received multicarrier modulation signal, and outputs the resultant signal;
a signal detecting circuit that decodes the signal outputted by the interference cancelling circuit, and outputs the decoding process result; and
a chip controlling circuit that controls at least the interference cancelling circuit, wherein
the interference cancelling circuit comprises a circuit that generates the modulation symbol replica with the use of the decoding process result of part of data modulation symbols constituting the signal received by a receiving unit.

**Amended claims under Art. 19.1 PCT**

**1.** After amendment] A receiving device comprising:

a receiving unit that receives a multicarrier modulation signal;
an interference cancelling unit that removes a time-domain interference replica generated using a decoding process result, from the signal received by the receiving unit; and
a signal detecting unit that decodes the signal outputted by the interference cancelling unit, and outputs the decoding process result, wherein
the interference cancelling unit generates the interference replica with the use of the decoding process result of part of data modulation symbols constituting the signal received by the receiving unit.

**2.** Deleted]

**3.** After amendment] The receiving device according to claim 1, wherein

the receiving unit receives the multicarrier modulation signal including the data modulation symbols generated using encoding bits of a plurality of encoding blocks, and

the interference cancelling unit generates the interference replica with the use of the decoding process result of the data modulation symbols for at least one of the encoding blocks.

**4.** The receiving device according to claim 3, wherein
the encoding blocks in the multicarrier modulation signal are allocated for each user.

**5.** The receiving device according to claim 1, wherein
the signal detecting unit decodes only a desired data modulation symbol in the signal outputted by the interference cancelling unit, and outputs the decoding process result.

**6.** After amendment]
The receiving device according to claim 1, further comprising a demodulating unit that demodulates the signal outputted by the interference cancelling unit, wherein
the interference cancelling unit generates the interference replica with the use of: the decoding process result of part of the data modulation symbols; and the demodulation process result outputted by the demodulating unit, of another part of the data modulation symbols, the data modulation symbols constituting the signal received by the receiving unit.

**7.** After amendment]
The receiving device according to claim 6, wherein
the receiving unit receives the multicarrier modulation signal including the data modulation symbols generated using encoding bits of a plurality of encoding blocks, and
the interference cancelling unit generates the interference replica with the use of: the decoding process result of the data modulation symbols for at least one of the encoding blocks; and the demodulation result of the data modulation symbols for at least another one of the encoding blocks.

**8.** The receiving device according to claim 1, wherein
the interference cancelling unit comprises:
a symbol replica generating unit that generates a modulation symbol replica with the use of the decoding process result;
an interference replica generating unit that generates the interference replica with the use of the modulation symbol replica and a propagation channel estimation value; and
a subtracting unit that subtracts the interference replica from the signal received by the receiving unit.

**9.** After amendment]
A receiving method comprising:

a first step of receiving a multicarrier modulation signal;
a second step of removing a time-domain interference replica generated using a decoding process result, from the signal received in the first step, and outputting the resultant signal; and
a third step of decoding the signal outputted in the second step, and outputting the decoding process result, wherein
the second step comprises a step of generating the interference replica with the use of the decoding process result of part of data modulation symbols constituting the signal received by the receiving unit.

**10.** After amendment]
A communication system comprising:

a transmitting device that transmits a multicarrier modulation signal; and
a receiving device that receives and decodes the signal transmitted by the transmitting device,
the receiving device comprising:

a receiving unit that receives the signal transmitted by the transmitting device;
an interference cancelling unit that removes a time-domain interference replica generated using a decoding process result, from the signal received by the receiving unit, and outputs the resultant signal; and
a signal detecting unit that decodes the signal outputted by the interference cancelling unit, and outputs the decoding process result, wherein

the interference cancelling unit generates the interference replica with the use of the decoding process result of part of data modulation symbols constituting the signal received by the receiving unit.

**11.** After amendment]
A communication method comprising:

a step of transmitting a multicarrier modulation signal; and
a step of receiving and decoding the signal transmitted by the transmitting device,
the step of receiving and decoding comprising:

a first step of receiving the multicarrier modulation signal;
a second step of removing a time-domain interference replica generated using a decoding process result, from the signal received in the first step, and outputting the resultant signal; and
a third step of decoding the signal outputted in the second step, and outputting the decoding process result, wherein

the second step comprises generating the interference replica with the use of the decoding process result of part of data modulation symbols constituting the signal received by the receiving unit.

**12.** After amendment]
A receiving circuit comprising:

an interference cancelling circuit that removes a time-domain interference replica generated using a decoding process result, from a received multicarrier modulation signal, and outputs the resultant signal;
a signal detecting circuit that decodes the signal outputted by the interference cancelling circuit, and outputs the decoding process result; and
a chip controlling circuit that controls at least the interference cancelling circuit,

wherein
the interference cancelling circuit comprises a circuit that generates the interference replica with the use of the decoding process result of part of data modulation symbols constituting the signal received by a receiving unit.

. laim 13] [Added]
The receiving device according to claim 1, wherein
in a case where the number of symbols in the multicarrier modulation signal in which undesired data modulation symbols are arranged is larger than the number of symbols in the multicarrier modulation signal in which desired data modulation symbols are arranged,
the interference cancelling unit generates the interference replica with the use of the decoding process result of part of the desired data modulation symbols.

Fig. 1

EP 2 495 898 A1

Transmitting device

# Fig. 2

# Fig. 3

200

209

201

202

Propagation
channel
estimating unit

Signal allocation information

208-1

Receiving
unit

Interference
cancelling
unit

GI
removing
unit

FFT
unit

Propagation channel
compensating unit

Subcarrier demapping
unit

Demodulating
unit

Deinterleaving
unit

Decoding
unit

Information
bit of user 1

Received
signal
storing unit

204

205

206

207

210

221-1

222-1

223-1

203

Chip
controlling
circuit

211

# Fig. 4

Propagation channel estimation value

232 — Replica generating unit

231

After-decoding encoding bit LLR of user 1

Receiving unit output/received signal storing unit output — Subtracting unit

Interference cancelling unit

204

# Fig. 5

Propagation channel estimation value

Interference replica generating unit

245

GI inserting unit

244

IFFT unit

243

Symbol replica generating unit

242-1

Interleaving unit

241-1

# Fig. 6

Fig. 7

400

EP 2 495 898 A1

# Fig. 8

Propagation channel estimation value

```
                    ┌──────────────────────────────┐
                    │                    After-decoding encoding
                    │                    bit LLR of user 1
                    │         ┌─────────┐◄──
                    │         │ Replica │
              432 ──┤         │generating│◄──  After-demodulation
                    │         │  unit   │      encoding bit LLR of user 2
                    │         │    ⁞    │◄──
                    │         └─────────┘      After-demodulation
                    │      231                 encoding bit LLR of user N
Receiving unit      │         ┌─────────┐
output/received signal────────►Subtracting├──────►
storing unit output │         │  unit   │
                    │         └─────────┘
                    │   Interference cancelling unit
                    └──────────────────────────────┘
                               404
```

# Fig. 9

Replica generating unit (432)

- 241-1 Interleaving unit
- 242-1 Symbol replica generating unit
- 242-2 Symbol replica generating unit
- 242-N Symbol replica generating unit
- 243 IFFT unit
- 244 GI inserting unit
- 245 Interference replica generating unit

Propagation channel estimation value

After-decoding encoding bit LLR of user 1

After-demodulation encoding bit LLR of user 2

After-demodulation encoding bit LLR of user N

Fig. 10

Reception start

S201 — The number of times i of iterative interference cancelling process for desired user?

i = 0 (First process)

i > 0 (Iterative process)

S202 — Subtract interference replica

S203 — FFT process

S204 — Compensate propagation channel

S205 — Signal detection process on signal of desired user (demodulation process and decoding process)

S206 — Is predetermined number of times of iteration ended?

NO

YES — End

S207 — Does data error exist?

NO — End

YES

For desired user or not?

YES — S208 — S209 — Generate modulation symbol replica from decoding result

NO — S210 — Generate modulation symbol replica from demodulation result

S211 — Generate interference replica

# Fig. 11

# Fig. 12

Fig. 13

Signal allocation information

500

Transmitting device

Fig. 14

Fig. 15

# Fig. 16

Propagation channel estimation value

After-decoding encoding bit
LLR of decoding unit 223-1

After-decoding encoding bit
LLR of decoding unit 223-2

After-decoding encoding bit
LLR of decoding unit 223-N

232

Replica
generating unit

Selecting
unit

231

633

Receiving unit
output/received
signal storing unit
output

Subtracting
unit

Interference cancelling unit

604

# Fig. 17

```
                    ┌─────────────────┐
                    │ Reception start │
                    └────────┬────────┘
                             │
                             ▼
 i = 0                    ╱ The number of ╲        ─── S301
(First process)      ╱ times i of iterative interference ╲
                    ╲ cancelling process for ╱
                      ╲ desired user? ╱
                             │
                          i > 0
                     (Iterative process)
                             │
                             ▼
              ┌──────────────────────────┐
              │ Subtract interference replica │  ─── S302
              └──────────────────────────┘
```

S303 ──  FFT process                   Generate interference replica  ── S309

S304 ──  Compensate propagation channel

S305 ──  Signal detection process on signal of desired user (demodulation process and decoding process)      Generate modulation symbol replica for desired encoding block  ── S308

S306 ── Is predetermined number of times of iteration ended?

YES

S307 ── Does data error exist?    YES

NO

End          End

# Fig. 18

# Fig. 19

<p style="text-align:center">**INTERNATIONAL SEARCH REPORT**</p>

| International application No. |
| --- |
| PCT/JP2010/068365 |

A. CLASSIFICATION OF SUBJECT MATTER
*H04J11/00*(2006.01)i, *H04J1/00*(2006.01)i

According to International Patent Classification (IPC) or to both national classification and IPC

B. FIELDS SEARCHED

Minimum documentation searched (classification system followed by classification symbols)
H04J11/00, H04J1/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2008/105214 A1 (Osaka University),<br>04 September 2008 (04.09.2008),<br>paragraphs [0062] to [0064], [0067] to<br>[0071], [0078] to [0085]; fig. 2, 3, 11, 12<br>& JP 2008-219144 A       & US 2010/0104041 A1<br>& EP 2129020 A1       & CN 101622840 A<br>& KR 10-2009-0117790 A | 1-5,8-12<br>6,7 |
| X<br>A | WO 2009/110547 A1 (Sharp Corp.),<br>11 September 2009 (11.09.2009),<br>paragraphs [0072] to [0082]; fig. 5<br>(Family: none) | 1-5,8-12<br>6,7 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 November, 2010 (04.11.10) | 16 November, 2010 (16.11.10) |

| Name and mailing address of the ISA/<br>    Japanese Patent Office | Authorized officer |
| --- | --- |
| Facsimile No. | Telephone No. |

Form PCT/ISA/210 (second sheet) (July 2009)

## INTERNATIONAL SEARCH REPORT

International application No.

PCT/JP2010/068365

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | WO 2008/047776 A1  (NEC Corp.),<br>24 April 2008 (24.04.2008),<br>paragraphs [0018] to [0019], [0045] to [0055],<br>[0057]; fig. 4<br>& US 2010/0208718 A1    & KR 10-2009-0075726 A<br>& CN 1015297966 A | 1-5,8-12<br>6,7 |
| A | Tadashi MATSUMOTO et al., "Turbo Equalization : Fundamentals and Information Theoretic Considerations", The Transactions of the Institute of Electronics, Information and Communication Engineers, vol.J90-B, no.1, 01 January 2007 (01.01.2007), pages 1 to 16 | 1-12 |

Form PCT/ISA/210 (continuation of second sheet) (July 2009)

**EP 2 495 898 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004221702 A
- WO 2007136056 A

- JP 2009246037 A

**Non-patent literature cited in the description**

- 3rd Generation Partnership Project; Technical Specification Group Radio Access Network; Evolved Universal Terrestrial Radio Access (E-UTRA); Physical Channels and Modulation (Release 8. *3GPP TS 36.211 V8.3.0,* May 2008